# EUROPÄISCHE PATENTANMELDUNG

(11) **EP 3 865 527 A1**
(43) Veröffentlichungstag der Anmeldung: **18.08.2021**
(21) Anmeldenummer: 20157313.6
(22) Anmeldetag: 14.02.2020
(51) Int. Cl.: C08G 18/20, C08G 18/24, C08G 18/48, C08G 18/76, C08G 77/14, C08G 77/46, C08L 83/12, C08J 9/00

(54) **HERSTELLUNG VON PU-SCHAUMSTOFFEN**

(71) Anmelder: Evonik Operations GmbH, 45128 Essen (DE)
(72) Erfinder: WESSELY, Isabelle Denise, 76137 Karlsruhe (DE); TERHEIDEN, Annegret, 46519 Alpen (DE); LANDERS, Rüdiger, 45257 Essen (DE); HUBEL, Roland, 45136 Essen (DE); KNOTT, Wilfried, 45355 Essen (DE); WINDBIEL, Dagmar, 45289 Essen (DE); DUDZIK, Horst, 45326 Essen (DE)
(74) Vertreter: Evonik Patent Association

(57) **Zusammenfassung**

Verfahren zur Herstellung von PU-Schaumstoffen durch Umsetzung mindestens einer Polyolkomponente mit mindestens einer Isocyanatkomponente in Gegenwart von einem oder mehreren Katalysatoren, die die Reaktionen Isocyanat-Polyol und/oder Isocyanat-Wasser und/oder die IsocyanatTrimerisierung katalysieren,
sowie optional von ein oder mehreren chemischen oder physikalischen Treibmitteln, unter Einsatz von SiOC-verknüpften, linearen Polydialkylsiloxan-Polyoxyalkylen-Blockcopolymeren mit sich wiederholenden (AB)-Einheiten, erhältlich durch Umsetzung von Polyetherdiolen mit äquilibrierten α,ω-Diacetoxypolydialkylsiloxanen,
wobei so viel von den SiOC-verknüpften, linearen Polydialkylsiloxan-Polyoxyalkylen-Blockcopolymeren mit sich wiederholenden (AB)-Einheiten zugegeben wird, dass der Massenanteil dieser Komponente bezogen auf den fertigen PU-Schaumstoff von 0,0001 bis 10 Gew.-%, vorzugsweise 0,01 bis 6 Gew.-%, insbesondere 0,05 bis 5 Gew.-% beträgt.

## Beschreibung

Die vorliegende Erfindung liegt auf dem Feld der PU-Schaumstoffe. Sie betrifft insbesondere ein Verfahren zur Herstellung von PU-Schaumstoffen unter Einsatz von bestimmten SiOC-verknüpften, linearen Polydialkylsiloxan-Polyoxyalkylen-Blockcopolymeren mit sich wiederholenden (AB)-Einheiten.

Polyurethan-Schaumstoffe (PU-Schaumstoffe) sind an sich bekannt. Es handelt sich um zelluläre und/oder mikrozelluläre Polyurethanmaterialen. Sie können u.a. in geschlossenzellige oder teilweise geschlossenzellige PU-Hartschaumstoffe und offenzellige oder teilweise offenzellige PU-Weichschaumstoffe unterteilt werden. PU-Hartschaumstoffe werden vorwiegend als Dämmmaterialien z.B. in Kühlschranksystemen oder bei der Wärmeisolation von Gebäuden eingesetzt. PU-Weichschaumstoffe werden in einer Vielzahl von technischen Anwendungen in Industrie und privatem Bereich eingesetzt, z.B. zur Geräuschdämmung, zur Herstellung von Matratzen oder zur Polsterung von Möbeln. Einen besonders wichtigen Markt für verschiedene Typen von PU-Schäumen, wie konventionelle Weichschaumstoffe auf Ether- oder Esterpolyolbasis, Kaltweichschaumstoffe, im Folgenden auch als Kaltschäume (häufig auch als "High Resilience" (HR) Schäume) bezeichnet, viskoelastische Weichschaumstoffe und Hartschäume, sowie Schäume deren Eigenschaften zwischen diesen Klassifizierungen liegen, stellt z.B. die Automobilindustrie dar. Es können hier z.B. Hartschäume als Dachhimmel, Esterschäume zur Innenverkleidung der Türen sowie für ausgestanzte Sonnenblenden, Kalt- und Weichschäume für Sitzsysteme verwendet werden. Ein weiterer besonders wichtiger Markt betrifft Matratzen und Sitzsysteme in Wohnungen, Büros und dergleichen. Mit Blick auf Weichschaumstoffe kann auch zwischen Kaltweichschaumstoffen und Heißweichschaumstoffen unterschieden werden, wie z.B. in EP 2042 534 A1 beschrieben, worauf hier im vollen Umfang Bezug genommen wird.

Eine spezielle Klasse der Polyurethanweichschaumstoffe ist die der viskoelastischen Schaumstoffe. Sie zeichnen sich sowohl durch eine geringe Rückprallelastizität (vorzugsweise < 10%, wohingegen die Rückprallelastizität von konventionellen PU-Weichschäumen bei 35 - 45% liegt) als auch durch eine langsame, graduelle Rückverformung nach einer erfolgten Kompression aus (Rückverformungszeit vorzugsweise 2 - 10 s). Solche Materialien sind im Stand der Technik wohlbekannt und werden wegen ihrer energie- und schallabsorbierenden Eigenschaften sehr geschätzt. Viskoelastische Schaumstoffmaterialien finden sich in einer Vielzahl von Anwendungsbereichen zur Polsterung (wie z.B. in Kissen, Sitzbezügen, Matratzen usw.), als Schall- und/oder Vibrations-dämpfende Materialien oder auch als Aufprallschutz. Typische viskoelastische Schaumstoffe haben eine geringere Porosität und eine hohe Dichte verglichen mit Standardetherpolyurethanweichschäumen. Kissen liegen mit einem Raumgewicht von gewöhnlich 30 - 50 kg/m³ am unteren Ende der für viskoelastische Schaumstoffe typischen Dichteskala, wohingegen Matratzen oft eine Dichte im Bereich von 50 - 130 kg/m³ aufweisen.

Die Mehrzahl der konventionellen Polyurethanschaumstoffe stellen Blockcopolymere dar, welche räumlich getrennte Bereiche verschiedener Phasen mit hohen und niedrigen Glasübergangstemperaturen (TG) aufweisen. Die Glasübergangstemperatur trennt dabei den unterhalb von ihr liegenden spröden energieelastischen Bereich (= Glasbereich) von dem oberhalb von ihr liegenden weichen entropieelastischen Bereich (= gummielastischer Bereich). Die DMA-("dynamic mechanical analysis") Spektren solcher Materialien zeichnen sich üblicherweise durch einen relativ flachen Bereich ("modulus plateau") zwischen den verschiedenen Glasübergängen aus. Der Bereich geringer Glasübergangstemperatur (oft auch als "Weichblock" bezeichnet) leitet sich üblicherweise von einer Flüssigkeit oder von einem oligomeren Harz geringer Schmelztemperatur ab, wie beispielsweise. Polyether- und Polyesterpolyole. Die Phase hoher Glasübergangstemperatur bildet sich während der Polymerisation, bedingt durch die dann erfolgende Ausbildung der Urethaneinheiten, aus.

In konventionellen Polyurethanen ordnen sich die harten (hohe Glasübergangstemperatur) und weichen (geringe Glasübergangstemperatur) Phasen während der Polymerisation zueinander an und trennen sich anschließend spontan voneinander. Chemische Viskoelastische Polyurethanschäume stellen in diesem Zusammenhang einen Spezialfall dar, bei welchen die oben beschriebene Phasentrennung nur unvollständig oder überhaupt nicht auftritt. Die Glastemperatur liegt bei viskoelastischen Schaumstoffen vorzugsweise zwischen -20 und +15 °C, die Glasübergangstemperatur von Standard-Polyurethan-Weichschäumen dagegen regelmäßig bei unter -35°C.

Generell sind viskoelastische Polyurethanschaumstoffe schwieriger in kommerziellem Maße herzustellen als herkömmliche PU Weichschäume. Die Verschäumung selbst und die Aushärtung des erhaltenen Schaumstoffs sind sehr empfindlich gegenüber Störungen. Kleine Schwankungen in der Zusammensetzung (beispielsweise bei Schwankungen in Katalysatorbeladung) oder in der Prozessführung können schnell zu Ausschussware führen. Die Menge an Wasser ist bei der Herstellung von viskoelastischen PU-Schaumstoffen mit typischerweise unter 3 pphp (Teile pro hundert Teile Polyol) geringer als bei herkömmlichen PU-Weichschäumen. Diese Tatsache in Kombination mit der Verwendung von speziellen Polyolen erschwert die Produktion viskoelastischer PU-Schaumstoffe sehr deutlich.

Neben den oben beschriebenen Problemen bei der Produktion von viskoelastischen PU-Schaumstoffen ist es allgemein bekannt, dass die Zellöffnung bei der Herstellung solcher Schaumstoffe einen besonders kritischen Schritt darstellt. Besonders bei Verwendung von TDI T80 als Isocyanatkomponente kommt es infolge von unzureichender Zellöffnung häufig zu starkem Schrumpf, was wiederum die Prozessführung erschwert. Des Weiteren geht ein allgemeiner Trend zu höheren Schaumdichten. Höhere Dichten erfordern allerdings einen geringeren Wasseranteil und somit einen geringeren Anteil an chemischem Treibmittel in der Schaumformulierung. Die Reduktion an Wasser resultiert in einer geringeren Menge an gebildetem Harnstoff, wodurch wiederum ein Schaumstoff mit geringerer Porosität resultiert. Um diese Geschlossenheit der Zellen auszugleichen, werden in solchen Formulierungen Zellöffner eingesetzt.

Zur Öffnung von geschlossenen Zellen in Polyurethan-Weichschaumstoffen sind im Stand der Technik verschiedene weitere Möglichkeiten bekannt.

So ist es möglich, die Zellen in Polyurethan-Weichschäumen auf mechanischem Weg durch Walken der entsprechenden Formteile nach der Entformung zu öffnen. Dieses Verfahren ist weit verbreitet, allerdings sowohl zeit- als auch energieaufwendig und nur bei der Herstellung von Formteilen anwendbar.

Weiterhin kann die Offenzelligkeit von viskoelastischen Polyurethanschaumstoffen dadurch verbessert werden, dass als Verbindungen mit mindestens zwei mit Isocyanatgruppen reaktiven Wasserstoffatomen in Form von Gemische aus mindestens einem Polyetheralkohol mit einem hohen Gehalt an Ethylenoxid, vorzugsweise mindestens 50 Gew.-%, und mindestens einem mit diesen Polyetheralkoholen unverträglichen Polyetheralkohol mit einem hohen Gehalt am Propylenoxid, vorzugsweise mindestens 90 Gew.-%, eingesetzt werden, wie beispielsweise in den Patentschriften US 2004/0254256 oder EP 1 240 228 beschrieben. Durch den Einsatz der ethylenoxidreichen Polyetheralkohole wird die Offenzelligkeit der Schaumstoffe zwar erhöht, nachteilig ist jedoch die Erhöhung der Hydrophilie der Schaumstoffe. Dadurch quellen diese Schäume bis zu 40 Vol % im Kontakt mit Wasser auf. Dieses Quellverhalten ist insbesondere für Anwendungen in feuchten Umgebungen inakzeptabel.

Als Zellöffner kommen im Stand der Technik weiterhin verschiedenartige Additive zum Einsatz. So werden zum Öffnen von Polyurethanschaumstoffen häufig Feststoffpartikel eingesetzt. Beispielsweise ist CaCO₃ ein gängiger Füllstoff in der PU-Industrie. Jedoch sind die zellöffnenden Eigenschaften von Kalziumcarbonat für viskoelastische Anwendungen meist zu gering.

Eine gängige Methode zum Öffnen der Zellen wassergetriebener Polyurethanschäume ist der Einsatz von inkompatiblen Flüssigkeiten, sogenannten Entschäumern. Diese sind nicht mischbar mit der Polyol/Isocyanat-Reaktionsmischung, können jedoch an der Phasengrenzfläche Einfluss auf die Silikonstabilisatoren in der Reaktionsmischung nehmen und so die Zellöffnung erleichtern. Typischerweise werden hierfür Dimethylsiloxane (Silikonöle) eingesetzt. Ein bekanntes Problem beim Einsatz von Silikonölen ist, dass sie die Zellöffnung in einem sehr frühen Stadium der Schaumbildung vorantreiben und damit den Schaum destabilisieren. Ein weiterer Nachteil des Einsatzes von Silikonölen als Zellöffner ist das sehr enge Verarbeitungsspiel und die meist sehr grobe Zellstruktur der erhaltenen Schaumstoffe. Weiterhin können auch Mineralöle als inkompatible Flüssigkeiten eingesetzt werden. Diese sind zwar effektive Zellöffner, führen aber zu einer öligen Oberfläche und somit zu einer ungewünschten haptischen Wahrnehmung der Schaumstoffe. Es gibt jedoch auch inkompatible Flüssigkeiten, welche durchaus als Zellöffner in Frage kommen. Ein häufig auftretendes Problem bei als Zellöffnern eingesetzten inkompatiblen Flüssigkeiten ist der unangenehme Geruch und das schlechte Emissionsverhalten, beispielsweise ermittelt entsprechend dem Prüfkammerverfahren in Anlehnung an die DIN-Norm DIN EN ISO 16000-9:2008-04, 24 Stunden nach Prüfkammerbeladung.

Ein weiterer Ansatz ist die Verwendung von linearen Blockcopolymeren bestehend aus Polydialkylsiloxanblöcken und Polyetherblöcken [(Polyether)(Polydialkylsiloxan)]ₙ wie sie in den Patenschriften US 3 836 560 oder DE 10 2006 061 351 A1 beschrieben sind. Diese A(BA)ₙ Strukuren sind in der Lage den Schaum in der Entstehungsphase zu stabilisieren, indem sie die Koaleszenz der Gasbläschen verhindern. Am Ende der schaumbildenden Reaktion erleichtern sie dann die Zellöffnung. Unterhalb von 30000 g/mol ist die stabilisierende Wirkung der A(BA)ₙ Copolymere nur zu einem geringen Teil gegeben, weshalb die mindeste durchschnittliche Molmasse typischerweise bei 30000 g/mol, vorzugsweise zwischen 60000 g/mol und 120000 g/mol liegt. Problematisch jedoch ist, dass diese Strukturen in Anwesenheit von Wasser zur Bildung von Hydrogelen neigen, was ihre Einsatzbreite sehr weit einschränkt. Ein zweites Problem mit solchen A(BA)ₙ Strukturen ist, dass die Kontrolle des Molgewichts während der Produktion nicht trivial ist, was zu einer aufwändigen Prozessführung führt. Weiterhin sind solche Strukturen durch ihr hohes Molekulargewicht meist hoch viskos, was zu Schwierigkeiten in der Handhabung seitens der Verschäumer führen kann. Ein weiteres Problem dieser Stoffklasse sind die hohen Mengen flüchtiger organischer Verbindungen (VOC), die einerseits aufgrund der eingesetzten Rohstoffe und andererseits durch die Prozessführung auftreten und im hergestellten PU-Schaumstoff zu hohen Emissionswerten und intensivem Geruch führen.

Es besteht nach wie vor der Bedarf, die Herstellung von PU-Schaumstoffen, insbesondere von viskoelastischen Polyurethanschaumstoffen, mit Blick auf die Produktqualität zu verbessern, insbesondere mit Blick auf die Herstellung von geruchsarmen PU-Schäumen und/oder mit Blick auf die Herstellung von emissionsarmen PU-Schäumen. Die konkrete Aufgabe der hier vorliegenden Erfindung war deshalb die Bereitstellung von PU-Schaumstoffen, insbesondere viskoelastischen Polyurethanschaumstoffen, die geruchsarm und/oder emissionsarm hinsichtlich der Emissionen von flüchtigen organischen Verbindungen (VOC) sind.

Überraschenderweise wurde gefunden, dass ein Verfahren zur Herstellung von PU-Schaumstoffen unter Einsatz von bestimmten SiOC-verknüpften, linearen Polydialkylsiloxan-Polyoxyalkylen-Blockcopolymeren mit sich wiederholenden (AB)-Einheiten, diese Aufgabe löst.
Gegenstand der vorliegenden Erfindung ist vor diesem Hintergrund ein Verfahren zur Herstellung von PU-Schaumstoffen durch Umsetzung
(a) mindestens einer Polyolkomponente mit
(b) mindestens einer Isocyanatkomponente
   in Gegenwart von
(c) einem oder mehreren Katalysatoren, die die Reaktionen Isocyanat-Polyol und/oder Isocyanat-Wasser und/oder die Isocyanat-Trimerisierung katalysieren, sowie
(d) optional von ein oder mehreren chemischen oder physikalischen Treibmitteln,
   unter Einsatz von
(e) SiOC-verknüpften, linearen Polydialkylsiloxan-Polyoxyalkylen-Blockcopolymeren mit sich wiederholenden (AB)-Einheiten, erhältlich durch Umsetzung von Polyetherdiolen mit äquilibrierten, vorzugsweise endäquilibrierten, α,ω-Diacetoxypolydialkylsiloxanen,
   wobei so viel von den SiOC-verknüpften, linearen Polydialkylsiloxan-Polyoxyalkylen-Blockcopolymeren mit sich wiederholenden (AB)-Einheiten (e) zugegeben wird, dass der Massenanteil dieser Komponente (e) bezogen auf den fertigen PU-Schaumstoff von 0,0001 bis 10 Gew.-%, vorzugsweise 0,01 bis 6 Gew.-%, insbesondere 0,05 bis 5 Gew.-% beträgt.

Die Komponenten (a) bis (d) sind an sich bekannt, sie werden weiter unten genauer beschrieben. Die Komponente (e) im Sinne dieser Erfindung sind SiOC-verknüpften, lineare Polydialkylsiloxan-Polyoxyalkylen-Blockcopolymere mit sich wiederholenden (AB)-Einheiten, erhältlich durch Umsetzung von Polyetherdiolen mit äquilibrierten, vorzugsweise endäquilibrierten, α,ω-Diacetoxypolydialkylsiloxanen.

Einsetzbare Komponente (e) und Möglichkeiten deren Bereitstellung werden in der noch nicht veröffentlichten europäischen Patentanmeldung mit dem Aktenzeichen 18189072.4 ausführlich beschrieben. Die Komponente (e) und deren Bereitstellung wird auch weiter unten in der vorliegenden Beschreibung detailliert beschrieben. Die Offenbarung der noch nicht veröffentlichten europäischen Patentanmeldung mit dem Aktenzeichen 18189072.4 wird vollumfänglich in die vorliegende Beschreibung mit aufgenommen.

Vorteilhafterweise ermöglicht die vorliegende Erfindung die Bereitstellung von geruchsarmen und/oder emissionsarmen PU-Schaumstoffen, insbesondere von geruchsarmen und/oder emissionsarmen viskoelastischen PU-Schaumstoffen, wie in den Beispielen belegt. Geruchsarm bedeutet hier, dass der resultierende PU-Schaumstoff einen geringeren Produktgeruch aufweist, als Resultat der Verwendung der Komponente (e), im Vergleich zu ansonsten vergleichbar hergestellten Schäumen, bei denen allerdings Zell-öffnende und/oder -stabilisierende Additive nach dem Stand der Technik eingesetzt wurden, was insbesondere durch olfaktorische Überprüfung durch ein Panel von geruchlich geschulten Personen überprüfbar ist. Die im Sinne der vorliegenden Erfindung gewählten Bestimmungsmethoden sind im Beispielteil detailliert erläutert.

Emissionsarm betrifft die Emissionen von flüchtigen organischen Verbindungen (VOC). Deren Bestimmung erfolgt nach dem Prüfkammertest (PK) in Anlehnung an die DIN-Norm DIN EN ISO 16000-9:2008-04, 24 Stunden nach Prüfkammerbeladung, wie im Beispielteil genau erläutert. Emissionsarm bedeutet hier, dass der resultierende PU-Schaumstoff, insbesondere ein viskoelastischen PU-Schaumstoff, eine geringere VOC-Emission aufweist, als Resultat der Verwendung der Komponente (e), im Vergleich zu ansonsten vergleichbar hergestellten Schäumen, bei denen allerdings Zell-öffnende und/oder -stabilisierende Additive nach dem Stand der Technik eingesetzt wurden, was insbesondere durch den erfindungsgemäßen Prüfkammertest (PK) überprüfbar ist. Ein weiterer Vorteil ist, dass die betreffenden PU-Schaumstoffe, wie z.B. PU-Heißweichschaumstoffe, auch Emissions-Spezifikationen wie CertiPUR erfüllen können. Emissionsarm nach CertiPUR heißt hierbei, dass die Gesamt- Emissionen flüchtiger organischer Substanzen (TVOC) kleiner 500 µg/m³ ist. Nähere technische Angaben zu den Anforderungen für den CertiPUR Standard (Version 1. July 2017) finden sich unter: https://www.europur.org/images/CertiPUR_Technical_Paper_-20_Full_Version_-_2017.pdf.Dieses letztgenannte Dokument (Version 1. July 2017) kann auch direkt bei der EUROPUR, Avenue de Cortenbergh 71, B-1000 Brussels, Belgium abgefordert werden.

Ein weiterer Vorteil ist, dass die betreffenden PU-Schaumstoffe, wie z.B. PU-Heißweichschaumstoffe, besonders emissionsarm sind mit Blick auf Emissionen von niedermolekularen linearen und zyklischen Siloxanen. "Emissionsarm" hinsichtlich von niedermolekularen Siloxanen umfasst im Sinne der vorliegenden Erfindung insbesondere, dass der erfindungsgemäß resultierende PU-Schaumstoffe eine Siloxan-Emission von ≥ 0 µg/m³ und ≤ 500 µg/m³, vorzugsweise ≤ 200 µg/m³, besonders bevorzugt ≤ 100 µg/m³, aufweist, entsprechend ermittelt nach dem Prüfkammerverfahren in Anlehnung an die DIN-Norm DIN EN ISO 16000-9:2008-04, 24 Stunden nach Prüfkammerbeladung. Diese Methode ist in der EP 3205680A1, dort in Absatz [0070], genau beschrieben, worauf hiermit Bezug genommen wird.

Die erfindungsgemäßen Gegenstände werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere in Bezug auf den Sachverhalt, in dessen Zusammenhang das Dokument zitiert wurde, vollständig zum Offenbarungsgehalt der vorliegenden Erfindung gehören. Bei Prozentangaben handelt es sich, wenn nicht anders angegeben, um Angaben in Gewichtsprozent. Werden nachfolgend Mittelwerte angegeben, so handelt es sich, wenn nicht anderes angegeben, um Gewichtsmittel. Werden nachfolgend Parameter angegeben, die durch Messung bestimmt wurden, so wurden die Messungen, wenn nicht anders angegeben, bei einer Temperatur von 25 °C und einem Druck von 101.325 Pa durchgeführt.

Unter Polyurethan (PU) wird im Rahmen der vorliegenden Erfindung insbesondere ein Produkt erhältlich durch Reaktion von Polyisocyanaten und Polyolen bzw. Verbindungen mit Isocyanat-reaktiven Gruppen verstanden. Es können hierbei neben dem Polyurethan auch weitere funktionelle Gruppen gebildet werden, wie z.B. Uretdione, Carbodiimide, Isocyanurate, Allophanate, Biurete, Harnstoffe und/oder Uretimine. Daher werden unter PU im Sinne der vorliegenden Erfindung sowohl Polyurethan als auch Polyisocyanurat, Polyharnstoffe und Uretdion-, Carbodiimid-, Allophanat-, Biuret- und Uretimin-Gruppen enthaltende Polyisocyanat-Reaktionsprodukte verstanden. Unter Polyurethanschaum (PU-Schaum) wird im Rahmen der vorliegenden Erfindung Schaum verstanden, der als Reaktionsprodukt basierend auf Polyisocyanaten und Polyolen bzw. Verbindungen mit Isocyanat-reaktiven Gruppen erhalten wird. Es können hierbei neben dem Namen gebenden, Polyurethan auch weitere funktionelle Gruppen gebildet werden, wie z.B. Allophanate, Biurete, Harnstoffe, Carbodiimide, Uretdione, Isocyanurate oder Uretimine. Daher werden unter PU-Schäumen im Sinne der vorliegenden Erfindung sowohl PU-Schäume (PUR-Schäume) als auch Polyisocyanurat-Schäume (PIR-Schäume) verstanden. Bevorzugte PU-Schäume sind PU-Weichschaumstoffe, PU-Hartschaumstoffe und PU-Integralschaumstoffe. Hierin besonders bevorzugt sind konventionelle PU-Weichschäume auf Ether- oder Esterpolyolbasis, hochelastische Polyurethankaltschaumstoffe (im folgenden auch als "High Resilience" also HR-PU-Schäume bezeichnet), viskoelastische PU-Schäume, PU-Hypersoft-Schaum, halbharte PU-Schäume und PU-Hartschaumstoffe, sowie PU-Schäume deren Eigenschaften zwischen diesen Klassifizierungen liegen und in der Automobilindustrie eingesetzt werden. Insbesondere alle vorgenannten PU-Schaumtypen sind von der Erfindung erfasst. Viskoelastische PU-Schaumstoffe sind im Rahmen dieser Erfindung allerdings am meisten bevorzugt.

Es versteht sich von selbst, dass der Fachmann zur Herstellung der unterschiedlichen PU-Schaumstofftypen, z.B. von Heiß-, Kalt-, Ester-PU-Weichschaumstoffen oder PU-Hartschaumstoffen, die hierfür jeweils notwendigen Substanzen, wie Isocyanate, Polyole, Stabilisatoren, Tenside, etc. entsprechend auswählt, um den jeweils gewünschten Polyurethan-Typ, insbesondere PU-Schaumtyp, zu erhalten.

Bei der erfindungsgemäßen Herstellung von PU-Schaumstoffen werden vorzugsweise zumindest eine Polyolkomponente und zumindest eine Isocyanatkomponente, optional in Gegenwart von Wasser, physikalischen oder chemischen Treibmitteln, Flammschutzmitteln, Katalysatoren und/oder weiteren Zusatzstoffen, miteinander reagiert und zwar unter Einsatz von erfindungsgemäßen SiOC-verknüpften, linearen Polydialkylsiloxan-Polyoxyalkylen-Blockcopolymeren mit sich wiederholenden (AB)-Einheiten, im Rahmen dieser Erfindung als Komponente (e) bezeichnet.

Weitere Angaben zu den einsetzbaren Ausgangsstoffen, Katalysatoren sowie Hilfs- und Zusatzstoffen finden sich z.B auch. im Kunststoffhandbuch, Band 7, Polyurethane, Carl-Hanser-Verlag München, 1. Auflage 1966, 2. Auflage, 1983 und 3. Auflage, 1993. Die nachstehenden Verbindungen, Komponenten und Zusatzstoffe sind bevorzugt einsetzbar.

Als Isocyanatkomponenten werden vorzugsweise ein oder mehrere organische Polyisocyanate mit zwei oder mehr Isocyanat-Funktionen eingesetzt. Als Polyolkomponenten werden vorzugsweise ein oder mehrere Polyole mit zwei oder mehr gegenüber Isocyanat reaktiven Gruppen, eingesetzt.

Als Isocyanatkomponenten geeignete Isocyanate im Sinne dieser Erfindung sind alle Isocyanate, die mindestens zwei Isocyanat-Gruppen enthalten. Generell können alle an sich bekannten aliphatischen, cycloaliphatischen, arylaliphatischen und vorzugsweise aromatischen mehrfunktionalen Isocyanate verwendet werden. Bevorzugt werden Isocyanate in einem Bereich von 60 bis 350 mol%, besonders bevorzugt in einem Bereich von 60 bis 140 mol%, relativ zu der Summe der isocyanatverbrauchenden Komponenten eingesetzt.

Beispielhaft genannt werden können hier Alkylendiisocyanate mit 4 bis 12 Kohlenstoffatomen im Alkylenrest, wie 1,12-Dodecandiisocyanat, 2-Ethyltetramethylendiisocyanat-1,4, 2-Methylpentamethylendiisocyanat-1,5, Tetramethylendiisocyanat-1,4, und vorzugsweise Hexamethylendiisocyanat-1,6 (HMDI), cycloaliphatische Diisocyanate, wie Cyclohexan-1,3- und 1-4-diisocyanat sowie beliebige Gemische dieser Isomeren, 1-Isocyanato-3,35-trimethyl-5-isocyanatomethylcyclohexan (Isophorondiisocyanat oder kurz IPDI), 2,4- und 2,6-Hexahydrotoluylendiisocyanat sowie die entsprechenden Isomerengemische, und vorzugsweise aromatische Di- und Polyisocyanate, wie z.B. 2,4- und 2,6-Toluoldiisocyanat (TDI) und die entsprechenden Isomerengemische, Mischungen aus 2,4'- und 2,2'-Diphenylmethandiisocyanaten (MDI) und Polyphenylpolymethylenpolyisocyanate (Roh-MDI) und Mischungen aus Roh-MDI und Toluoldiisocyanaten (TDI). Die organischen Di- und Polyisocyanate können einzeln oder in Form ihrer Mischungen eingesetzt werden.

Es ist auch möglich, Isocyanate einzusetzen, die durch den Einbau von Urethan-, Uretdion-, Isocyanurat-, Allophanat- und anderen Gruppen modifiziert wurden, sogenannte modifizierte Isocyanate.

Besonders geeignete organische Polyisocyanate und daher besonders bevorzugt angewendet werden verschiedene Isomere des Toluoldiisocyanat (2,4- und 2,6-Toluoldiisocyanat (TDI), in reiner Form oder als Isomerengemische unterschiedlicher Zusammensetzung), 4,4'-Diphenylmethandiisocyanat (MDI), das so genannte "crude MDI" oder "polymere MDI" (enthält neben dem 4,4'- auch die 2,4'- und 2,2'-Isomeren des MDI und höherkernige Produkte) sowie das als "pure MDI" bezeichnete zweikernige Produkt aus überwiegend 2,4'- und 4,4'-Isomerengemischen bzw. deren Prepolymeren. Beispiele für besonders geeignete Isocyanate sind z.B. in EP 1712578, EP 1161474, WO 00/58383, US 2007/0072951, EP 1678232 und der WO 2005/085310 aufgeführt, auf die hier in vollem Umfang Bezug genommen wird.

Als Polyolkomponente geeignete Polyole im Sinne der vorliegenden Erfindung sind alle organischen Substanzen mit mehreren gegenüber Isocyanaten reaktiven Gruppen, vorzugsweise OH-Gruppen, sowie deren Zubereitungen. Bevorzugte Polyole sind alle zur Herstellung von Polyurethan-Systemen, insbesondere PU-Schaumstoffen üblicherweise verwendeten Polyetherpolyole und/oder Polyesterpolyole und/oder hydroxylgruppenhaltigen aliphatischen Polycarbonate, insbesondere Polyetherpolycarbonatpolyole und/oder Polyole natürlicher Herkunft, sogenannte "natural oil based polyols" (NOPs). Üblicherweise besitzen die Polyole eine Funktionalität von 1,8 bis 8 und zahlengemittelte Molekulargewichte im Bereich von 500 bis 15000 g/mol. Üblicherweise kommen die Polyole mit OH-Zahlen im Bereich von 10 bis 1200 mg KOH/g zum Einsatz. Die zahlengemittelten Molekulargewichte werden üblicherweise durch Gelpermeationschromatographie (GPC), insbesondere mit Polypropylenglycol als Referenzsubstanz und Tetrahydrofuran (THF) als Elutionsmittel, bestimmt. Die OH-Zahlen können insbesondere nach der DIN-Norm DIN 53240:1971-12 bestimmt werden.

Bevorzugt einsetzbare Polyetherpolyole können nach bekannten Verfahren hergestellt werden, z.B. durch anionische Polymerisation von Alkylenoxiden in Gegenwart von Alkalihydroxiden, Alkylialkoholaten oder Aminen als Katalysatoren und unter Zusatz mindestens eines Startermoleküls, dass bevorzugt 2 oder 3 reaktive Wasserstoffatome gebunden enthält oder durch kationische Polymerisation von Alkylenoxiden in Gegenwart von Lewis-Säuren wie z.B. Antimonpentachlorid oder Bortrifluorid-Etherat oder durch Doppelmetallcyanidkatalyse. Geeignete Alkylenoxide enthalten 2 bis 4 Kohlenstoffatome im Alkylenrest. Beispiele sind Tetrahydrofuran, 1,3-Propylenoxid, 1,2- bzw. 2,3-Butylenoxid; vorzugsweise werden Ethylenoxid und 1,2-Propylenoxid eingesetzt. Die Alkylenoxide können einzeln, kumulativ, blockweise, alternierend nacheinander oder als Mischungen verwendet werden. Als Startmoleküle kommen insbesondere Verbindungen mit mindestens 2, vorzugsweise 2 bis 8 Hydroxylgruppen oder mit mindestens zwei primären Aminogruppen im Molekül zum Einsatz. Als Startermoleküle eingesetzt werden können z.B. Wasser, 2-, 3- oder 4-wertige Alkohole wie Ethylenglykol, Propandiol-1,2 und -1,3, Diethylenglykol, Dipropylenglykol, Glycerin, Trimethylolpropan, Pentaerythrit, Rizinusöl usw., höhere polyfunktionelle Polyole, insbesondere Zuckerverbindungen wie z.B. Glucose, Sorbit, Mannit und Saccharose, mehrwertige Phenole, Resole, wie z.B. oligomere Kondensationsprodukte aus Phenol und Formaldehyd und Mannich-Kondensate aus Phenolen, Formaldehyd und Dialkanolaminen sowie Melamin, oder Amine wie Anilin, EDA, TDA, MDA und PMDA, besonders bevorzugt TDA und PMDA. Die Wahl des geeigneten Startermoleküls ist abhängig von dem jeweiligen Anwendungsgebiet des resultierenden Polyetherpolyols bei der Polyurethanherstellung (z.B. werden zur Herstellung von PU-Weichschäumen andere Polyole verwendet als bei der Herstellung von PU-Hartschaumstoffen).

Bevorzugt einsetzbare Polyesterpolyole basieren auf Estern mehrwertiger aliphatischer oder aromatischer Carbonsäuren, bevorzugt mit 2 bis 12 Kohlenstoffatomen. Beispiele für aliphatische Carbonsäuren sind Bernsteinsäure, Glutarsäure, Adipinsäure, Korksäure, Azelainsäure, Sebacinsäure, Decandicarbonsäure, Maleinsäure und Fumarsäure. Beispiele für aromatische Carbonsäuren sind Phthalsäure, Isophthalsäure, Terephthalsäure und die isomeren Naphthalindicarbonsäuren. Die Polyesterpolyole werden durch Kondensation dieser mehrwertigen Carbonsäuren mit mehrwertigen Alkoholen, vorzugsweise von Diolen oder Triolen mit 2 bis 12, besonders bevorzugt mit 2 bis 6 Kohlenstoffatomen, bevorzugt Trimethylolpropan und Glycerin erhalten.

Bevorzugt einsetzbare Polyetherpolycarbonatpolyole sind Polyole, welche Kohlenstoffdioxid als Carbonat gebunden enthalten. Da Kohlenstoffdioxid bei vielen Prozessen in der chemischen Industrie in großen Mengen als Nebenprodukt entsteht, ist die Verwendung von Kohlendioxid als Comonomer in Alkylenoxid-Polymerisationen aus kommerzieller Sicht von besonderem Interesse. Ein teilweiser Ersatz von Alkylenoxiden in Polyolen durch Kohlendioxid hat das Potential, die Kosten für die Herstellung von Polyolen deutlich zu senken. Außerdem ist die Verwendung von CO₂ als Comonomer ökologisch sehr vorteilhaft, da diese Reaktion die Umsetzung eines Treibhausgases zu einem Polymer darstellt. Die Herstellung von Polyetherpolycarbonatpolyolen durch Anlagerung von Alkylenoxiden und Kohlendioxid an H-funktionelle Startsubstanzen unter Verwendung von Katalysatoren ist seit langem bekannt. Verschiedene Katalysatorsysteme können hierbei zum Einsatz kommen: Die erste Generation stellten heterogene Zink- oder Aluminiumsalze dar, wie sie z.B. in US-A 3900424 oder US-A 3953383 beschrieben sind. Des Weiteren sind mono- und binukleare Metallkomplexe zur Copolymerisation von CO₂ und Alkylenoxiden erfolgreich eingesetzt worden (WO 2010/028362, WO 2009/130470, WO 2013/022932 oder WO 2011/163133). Die wichtigste Klasse von Katalysatorsystemen für die Copolymerisation von Kohlenstoffdioxid und Alkylenoxiden stellen die Doppelmetallcyanidkatalysatoren, auch als DMC-Katalysatoren bezeichnet, dar (US-A 4500704, WO 2008/058913). Geeignete Alkylenoxide und H-funktionelle Startsubstanzen sind solche, die auch zur Herstellung von carbonatfreien Polyetherpolyolen - wie oben beschrieben - eingesetzt werden.

Bevorzugt einsetzbare Polyole auf Basis nachwachsender Rohstoffe "Natural oil based polyols" (NOPs) zur Herstellung von PU-Schäumen sind mit Blick auf die langfristig begrenzte Verfügbarkeit fossiler Ressourcen, namentlich Öl, Kohle und Gas, und vor dem Hintergrund steigender Rohölpreise von zunehmendem Interesse und bereits vielfach in solchen Anwendungen beschrieben (WO 2005/033167; US 2006/0293400, WO 2006/094227, WO 2004/096882, US 2002/0103091, WO 2006/116456 und EP 1678232). Mittlerweile sind auf dem Markt eine Reihe dieser Polyole von verschiedenen Herstellern verfügbar (WO2004/020497, US2006/0229375, WO2009/058367). In Abhängigkeit vom Basis-Rohstoff (z.B. Sojabohnenöl, Palmöl oder Rizinusöl) und die daran angeschlossene Aufarbeitung ergeben sich Polyole mit unterschiedlichem Eigenschaftsbild. Hierbei können im Wesentlichen zwei Gruppen unterschieden werden: a) Polyole auf Basis nachwachsender Rohstoffe, die soweit modifiziert werden, dass sie zu 100 % zur Herstellung von Polyurethanen eingesetzt werden können (WO2004/020497, US2006/0229375); b) Polyole auf Basis nachwachsender Rohstoffe, die bedingt durch ihre Aufarbeitung und Eigenschaften nur zu einem gewissen Anteil das petrochemisch basierte Polyol ersetzen können (WO2009/058367).

Eine weitere Klasse von bevorzugt einsetzbaren Polyolen stellen die sogenannten Füllkörperpolyole (Polymerpolyole) dar. Diese zeichnen sich dadurch aus, dass sie feste organische Füllstoffe bis zu einem Feststoffgehalt von 40 % oder mehr in disperser Verteilung enthalten. Einsetzbar sind unter anderem SAN-, PHD- und PIPA-Polyole. SAN-Polyole sind hochreaktive Polyole, welche ein Copolymer auf der Basis von Styrol/Acrylnitril (SAN) dispergiert enthalten. PHD-Polyole sind hochreaktive Polyole, welche Polyharnstoff ebenfalls in dispergierter Form enthalten. PIPA-Polyole sind hochreaktive Polyole, welche ein Polyurethan, z.B. durch in situ-Reaktion eines Isocyanats mit einem Alkanolamin in einem konventionellen Polyol gebildet, in dispergierter Form enthalten.

Der Festkörperanteil, der je nach Anwendung bevorzugt zwischen 5 und 40 %, bezogen auf das Polyol liegt, ist für eine verbesserte Zellöffnung verantwortlich, so dass das Polyol insbesondere mit TDI kontrolliert verschäumbar wird und kein Schrumpfen der Schäume auftritt. Der Festkörper wirkt damit als wesentliche Prozesshilfe. Eine weitere Funktion besteht darin, über den Feststoffanteil die Härte zu kontrollieren, denn höhere Festkörperanteile bewirken eine größere Härte des Schaums. Die Formulierungen mit feststoffhaltigen Polyolen sind deutlich weniger eigenstabil und bedürfen daher neben der chemischen Stabilisierung durch die Vernetzungsreaktion eher auch zusätzlich einer physikalischen Stabilisierung. Je nach Feststoffgehalt der Polyole können diese z.B. alleine oder z.B. in Abmischung mit den oben genannten ungefüllten Polyolen eingesetzt werden.

Eine weitere Klasse von bevorzugt einsetzbaren Polyolen sind solche, die als Prepolymere durch Umsetzung von Polyol mit Isocyanat in einem Molverhältnis von 100 zu 1 bis 5 zu 1, bevorzugt 50 zu 1 bis 10 zu 1, erhalten werden. Solche Prepolymere werden vorzugsweise gelöst in Polymer angesetzt, wobei das Polyol bevorzugt dem zur Herstellung der Prepolymeren eingesetzten Polyol entspricht.

Eine weitere Klasse von bevorzugt einsetzbaren Polyolen stellen die sogenannten autokatalytischen Polyole, insbesondere autokatalytische Polyetherpolyole, dar. Solche Polyole basieren z.B. auf Polyether-Blöcken, vorzugsweise auf Ethylenoxid- und/oder Propylenoxid-Blöcken, und beinhalten zudem katalytisch aktive funktionelle Gruppen, wie z.B. stickstoffhaltige funktionelle Gruppen, insbesondere Amino-Gruppen, vorzugsweise tertiäre Amin-Funktionen, Harnstoff-Gruppen und/oder Heterocyclen enthaltend Stickstoff-Atome. Durch die Verwendung solcher autokatalytsichen Polyole bei der Herstellung von PU-Schaumstoffen, bevorzugt PU-Weichschaumstoffen, kann die benötigte Menge an ggf. zusätzlich verwendeten Katalysatoren je nach Anwendung gegebenfalls reduziert und/oder auf spezielle gewünschte Schaumeigenschaften angepasst werden. Geeignete Polyole sind z.B. in WO0158976 (A1), WO2005063841 (A1), WO0222702 (A1), WO2006055396 (A1), WO03029320 (A1), WO0158976 (A1), US6924321 (B2), US6762274 (B2), EP2104696 (B1), WO2004060956 (A1) oder WO2013102053 (A1) beschrieben und können z.B. unter den Handelsnamen Voractiv™ und/oder SpecFlex™ Activ bei der Firma Dow bezogen werden.

Je nach den geforderten Eigenschaften der resultierenden Schäume können vorteilhafterweise entsprechende Polyole verwendet werden, wie sie z.B. beschrieben werden in: US 2007/0072951 A1, WO 2007/111828, US 2007/0238800, US 6359022 oder WO 96/12759. Weitere Polyole sind dem Fachmann bekannt und können z.B. der EP-A-0380993 oder US-A-3346557 entnommen werden, auf die im vollen Umfang Bezug genommen wird.

Gemäß einer bevorzugten Ausführungsform der Erfindung, insbesondere zur Herstellung von Form- und hochelastischen PU-Weichschaumstoffen, werden zwei- und/oder dreifunktionelle Polyetheralkohole eingesetzt, die primäre Hydroxylgruppen, bevorzugt über 50 %, besonders bevorzugt über 80 %, aufweisen, insbesondere solche mit einem Ethylenoxidblock am Kettenende. Je nach den geforderten Eigenschaften dieser erfindungsgemäß bevorzugten Ausführungsform, insbesondere zur Herstellung der oben genannten Schaumstoffe, werden neben den hier beschriebenen Polyetheralkoholen vorzugsweise weitere Polyetheralkohole eingesetzt, die primäre Hydroxylgruppen tragen und überwiegend auf Ethylenoxid basieren, insbesondere mit einem Anteil an Ethylenoxidblöcken von > 70 %, bevorzugt > 90 %. Alle im Sinne dieser bevorzugten Ausführungsform beschriebenen Polyetheralkohole besitzen vorzugsweise eine Funktionalität von 2 bis 8, besonders bevorzugt 2 bis 5, zahlengemittelte Molekulargewichte im Bereich von 2500 bis 15000, bevorzugt 4500 bis 12000 und üblicherweise OH-Zahlen im Bereich von 5 bis 80, vorzugsweise 20 bis 50 mg KOH/g.

Gemäß einer weiteren bevorzugten Ausführungsform der Erfindung, insbesondere zur Herstellung von PU-Blockweichschaumstoffen, werden zwei- und/oder dreifunktionelle Polyetheralkohole eingesetzt, die sekundäre Hydroxylgruppen, bevorzugt über 50 %, besonders bevorzugt über 90 %, aufweisen, insbesondere solche mit einem Propylenoxidblock oder statistischen Propylen- und Ethylenoxidblock am Kettenende oder solche, die nur auf Propylenoxidblöcken basieren. Solche Polyetheralkohole besitzen vorzugsweise eine Funktionalität von 2 bis 8, besonders bevorzugt 2 bis 4, zahlengemittelte Molekulargewichte im Bereich von 500 bis 8000, vorzugsweise 800 bis 5000, besonders bevorzugt 2500 bis 4500 g/mol und üblicherweise OH-Zahlen im Bereich von 10 bis 100, vorzugsweise 20 bis 60 mg KOH/g.

Gemäß einer weiteren bevorzugten Ausführungsform der Erfindung, insbesondere zur Herstellung von PU-Schaumstoffen, vorzugsweise von PU-Weichschaumstoffen, bevorzugt zur Herstellung von Form- und hochelastischen Weichschaumstoffen, werden autokatalytische Polyole, wie oben beschrieben, eingesetzt.

Gemäß einer weiteren bevorzugten Ausführungsform der Erfindung, insbesondere zur Herstellung von PU-Polyesterweichschaumstoffen, werden Polyesteralkohole auf Basis von Diolen und/oder Triolen, bevorzugt Glycerin und/oder Trimethylolpropan, und aliphatischen Carbonsäuren, bevorzugt Adipinsäure, Korksäure, Azelainsäure und/oder Sebacinsäure, eingesetzt. Solche Polyesteralkohole besitzen vorzugsweise eine Funktionalität von 2 bis 4, besonders bevorzugt 2 bis 3, zahlengemittelte Molekulargewichte im Bereich von 200 - 4000, vorzugsweise 400 - 3000, besonders bevorzugt 600 - 2500 g/mol und üblicherweise OH-Zahlen im Bereich von 10 - 1000, vorzugsweise 20 - 500, besonders bevorzugt 30 - 300 mg KOH/g.

Gemäß einer weiteren bevorzugten Ausführungsform der Erfindung, insbesondere zur Herstellung von Polyisocyanurat (PIR)-Hartschaumstoffen, werden Polyesteralkohole auf Basis von Diolen und/oder Triolen, bevorzugt Monoethylenglycol, und aromatischen Carbonsäuren, bevorzugt Phthalsäure und/oder Terephthalsäure, eingesetzt. Solche Polyesteralkohole besitzen vorzugsweise eine Funktionalität von 2 bis 4, besonders bevorzugt 2 bis 3, zahlengemittelte Molekulargewichte im Bereich von 200 - 1500, vorzugsweise 300 - 1200, besonders bevorzugt 400 - 1000 g/mol und üblicherweise OH-Zahlen im Bereich von 100 - 500, vorzugsweise 150 - 300, besonders bevorzugt 180 - 250 mg KOH/g.

Gemäß einer weiteren bevorzugten Ausführungsform der Erfindung, insbesondere zur Herstellung von PU-Hartschaumstoffen, werden zwei- bis acht-funktionelle Polyetheralkohole eingesetzt, die sekundäre Hydroxylgruppen, bevorzugt über 50 %, besonders bevorzugt über 90 %, aufweisen, insbesondere solche mit einem Propylenoxidblock oder statistischen Propylen- und Ethylenoxidblock am Kettenende oder solche, die nur auf Propylenoxidblöcken basieren. Solche Polyetheralkohole besitzen vorzugsweise eine Funktionalität von 2 bis 8, besonders bevorzugt 3 bis 8, zahlengemittelte Molekulargewichte im Bereich von 500 bis 2000, vorzugsweise 800 bis 1200 g/mol und üblicherweise OH-Zahlen im Bereich von 100 bis 1200, bevorzugt 120 bis 700, besonders bevorzugt 200 bis 600 mgKOH/g. Je nach den geforderten Eigenschaften dieser erfindungsgemäß bevorzugten Schaumstoffe können neben den hier beschriebenen Polyolen zusätzlich Polyetheralkohole, wie oben beschrieben mit größeren zahlengemittelten Molgewichten und niedrigeren OH-Zahlen, und/oder zusätzliche Polyesterpolyole, wie oben beschrieben basierend auf aromatischen Carbonsäuren, eingesetzt werden.

Gemäß einer weiteren bevorzugten Ausführungsform der Erfindung, insbesondere zur Herstellung von viskoelastischen PU-Schaumstoffen, werden vorzugsweise Gemische verschiedener, bevorzugt zweier oder dreier, mehrfunktioneller Polyesteralkohole und/oder Polyetheralkohole eingesetzt. Üblicherweise bestehen hier die eingesetzten Polyol-Kombinationen aus einem niedermolekularen "Crosslinker"-Polyol, beispielweise einem Hartschaum-Polyol, mit hoher Funktionalität (> 3) und/oder einem konventionellen hochmolekularen Blockweichschaum- oder HR-Polyol und/oder einem "Hypersoft"-Polyetherpolyol mit hohem Anteil an Ethylenoxidblöcken und mit zellöffnenden Eigenschaften.

Ein bevorzugtes Verhältnis von Isocyanat und Polyol, ausgedrückt als Index der Formulierung, d.h. als stöchiometrisches Verhältnis von Isocyanat-Gruppen zu gegenüber Isocyanat reaktiven Gruppen (z.B. OH-Gruppen, NH-Gruppen) multipliziert mit 100, liegt im Bereich von 10 bis 1000, bevorzugt 40 bis 350, besonders bevorzugt 70 bis 140. Ein Index von 100 steht für ein molares Verhältnis der reaktiven Gruppen von 1 zu 1.

Als Katalysatoren können im Rahmen dieser Erfindung zum Beispiel jegliche Katalysatoren für die Reaktionen Isocyanat-Polyol (Urethan-Bildung) und/oder Isocyanat-Wasser (Amin- und Kohlenstoffdioxid-Bildung) und/oder die Isocyanat-Dimerisierung (Uretdion-Bildung), Isocyanat-Trimerisierung (Isocyanurat-Bildung), Isocyanat-Isocyanat mit CO₂-Abspaltung (Carbodiimid-Bildung) und/oder Isocyanat-Amin (Harnstoff-Bildung) und/oder "sekundäre" Vernetzungsreaktionen wie Isocyanat-Urethan (Allophanat-Bildung) und/oder Isocyanat-Harnstoff (Biuret-Bildung) und/oder Isocyanat-Carbodiimid (Uretonimin-Bildung) eingesetzt werden.

Geeignete Katalysatoren im Sinne der vorliegenden Erfindung sind beispielsweise Substanzen, die eine der vorgenannten Umsetzungen, insbesondere die Gelreaktion (Isocyanat-Polyol), die Treibreaktion (Isocyanat-Wasser) und/oder die Di- bzw. Trimerisierung des Isocyanats katalysieren. Solche Katalysatoren sind vorzugsweise stickstoffhaltige Verbindungen, insbesondere Amine und Ammonium-Salze, und/oder metallhaltige Verbindungen.

Geeignete stickstoffhaltige Verbindungen als Katalysatoren, im Folgenden auch als stickstoffhaltige Katalysatoren bezeichnet, im Sinne der vorliegenden Erfindung sind alle stickstoffhaltigen Verbindungen nach dem Stand der Technik, die eine der oben genannten Isocyanat-Reaktionen katalysieren und/oder zur Herstellung von Polyurethanen, insbesondere von Polyurethanschaumstoffen eingesetzt werden können.

Beispiele für geeignete zusätzliche stickstoffhaltige Verbindungen als Katalysatoren im Sinne der vorliegenden Erfindung sind die Amine Triethylamin, Triethanolamin, Diethanolamin, *N,N*-Dimethylcyclohexylamin, *N,N*-Dicyclohexylmethylamin, *N,N*-Dimethylaminoethylamin, *N,N,N',N*'-Tetramethylethan-1,2-diamin, *N,N,N',N'-*Tetramethylpropan-1,3-diamin, *N,N,N',N*'-Tetramethylbutan-1,4-diamin, *N,N,N',N*'-Tetramethylhexan-1,6-diamin, *N*-[2-(Dimethylamino)ethyl]-*N*,*N*',*N*'-trimethyl-1,2-ethandiamin, 2-[(2-(Dimethylamino)ethyl)methylamino]ethanol, *N',N*'-Dimethylpropan-1,3-diamin, *N'*,*N*'-Diethyl-propan-1,3-diamin, 1-(2-Aminoethyl)pyrrolidin, 1-(3-Aminopropyl)pyrrolidin, 1-[3-(Dimethylamino)-propyl-(2-hydroxypropyl)amino]propan-2-ol, 2-[[3-(Dimethylamino)propyl]methylamino]ethanol, 3-(2-Dimethylamino)ethoxy)propylamin, *N*-[3-(Dimethylamino)propyl]-*N'*,*N*'-dimethylpropan-1,3-diamin, *N*'-[3-(Dimethylamino)propyl]-*N*,*N*,*N*'-trimethylpropan-1,3-diamin, 1-[Bis[3-(dimethylamino)propyl]amino]-2-propanol, *N*,*N*-Bis[3-(dimethylamino)propyl]-*N*',*N*'-dimethylpropan-1,3-diamin, 1,4-Diazabicyclo[2.2.2]octan, 1,4-Diazabicyclo[2.2.2]octan-2-methanol, 1,2-Dimethylimidazol, *N*-(2-Hydroxypropyl)imidazol, 2-Methyl-1-(2-methylpropyl)imidazol, N-(3-Aminopropyl)imidazol, *N*-Methylimidazol, 1-(3-Aminopropyl)-2-methyl-1*H*-imidazol, *N*-Ethylmorpholin, *N*-Methylmorpholin, 2,2,4-Trimethyl-2-silamorpholin, *N*-Ethyl-2,2-dimethyl-2-silamorpholin, *N*-(2-Aminoethyl)morpholin, *N*-(2-Hydroxyethyl)morpholin, 2,2'-Dimorpholinodiethylether, *N,N*'-Dimethylpiperazin, *N*-(2-Hydroxyethyl)piperazin, *N*-(2-Aminoethyl)piperazin, *N,N*-Dimethylbenzylamin, *N,N*-(Dimethylamino)ethanol, *N,N*-(Diethyl-amino)ethanol, 1-(2-Hydroxyethyl)pyrrolidin, 3-Dimethylamino-1-propanol, 1-(3-Hydroxypropyl)-pyrrolidin, 2-[2-(Dimethylamino)ethoxy]ethanol, 2-[2-(Diethylamino)ethoxy]ethanol, Bis(2-Dimethylaminoethyl)ether, 2-[[2-(2-(Dimethylamino)ethoxy)ethyl]methylamino]ethanol, N-[2-[2-(Dimethylamino)ethoxy]ethyl]-*N*-methyl-1,3-propandiamin, 1,3,5-Tris[3-(dimethylamino)propyl]hexahydro-1,3,5-triazin, 1,8-Diazabicyclo[5.4.0]undec-7-en, 1,5-Diazabicyclo[4.3.0]non-5-en, 1,5,7-Triazabicyclo[4.4.0]dec-5-en, *N*-Methyl-1,5,7-triazabicyclo[4.4.0]dec-5-en, 1,4,6-Triazabicyclo[3.3.0]oct-4-en, 1,1,3,3-Tetramethylguanidin, 2-*tert*-Butyl-1,1,3,3-tetramethylguanidin, Guanidin, 1,1'-[(3-{bis[3-(dimethylamino)-propyl]amino}propyl)imino]dipropan-2-ol, (3-Aminopropyl)bis[3-(dimethylamino)propyl]amin, 3-(Dimethylamino)propylharnstoff, 1,3-Bis[3-(dimethylamino)propyl]harnstoff, 3-Dimethylamino-*N*,*N-*dimethylpropanamid, 6-(Dimethylamino)hexan-1-ol und 2,4,6-Tris[(dimethylamino)methyl]phenol.

Derartige Katalysatoren und/oder Mischungen werden beispielsweise unter dem Namen Jeffcat® ZF-10, Lupragen® DMEA, Lupragen® API, Toyocat® RX 20 und Toyocat® RX 21 , DABCO® RP 202, DABCO® RP 204, DABCO® NE 300, DABCO® NE 310, DABCO® NE 400, DABCO® NE 500, DABCO® NE 600, DABCO® NE 650, DABCO® NE 660, DABCO® NE 740, DABCO® NE 750, DABCO® NE 1060, DABCO® NE 1080, DABCO® NE 1082 sowie DABCO® NE 2039 und Tegoamin® ZE 1 im Handel angeboten. Geeignete stickstoffhaltige Katalysatoren, nach dem Stand der Technik, können zum Beispiel von der Firma Evonik unter den Handelsnamen TEGOAMIN® und DABCO® bezogen werden.

Je nach Anwendung kann es bevorzugt sein, dass bei der erfindungsgemäßen Herstellung von Polyurethanschaumstoffen, quaternisierte und/oder protonierte stickstoffhaltige Katalysatoren, insbesondere quaternisierte und/oder protonierte tertiäre Amine, eingesetzt werden.

Zur möglichen Quaternisierung stickstoffhaltiger Katalysatoren können alle als Quaternisierungsreagenz bekannten Reagenzien eingesetzt werden. Vorzugsweise werden als Quaternisierungsmittel Alkylierungsmittel, wie z. B. Dimethylsulfat, Methylchlorid oder Benzylchlorid, bevorzugt Methylierungsmittel wie insbesondere Dimethylsulfat verwendet. Ebenso kann mit Alkylenoxiden wie zum Beispiel Ethylenoxid, Propylenoxid oder Butylenoxid, vorzugsweise mit anschließender Neutralisation mit anorganischen oder organischen Säuren, quaternisiert werden.

Stickstoffhaltige Katalysatoren können, sofern quaternisiert, einfach oder mehrfach quaternisiert sein. Vorzugsweise sind die stickstoffhaltigen Katalysatoren nur einfach quaternisiert. Bei einfacher Quaternisierung sind die stickstoffhaltigen Katalysatoren vorzugsweise an einem tertiären Stickstoffatom quaternisiert.

Stickstoffhaltige Katalysatoren können durch Umsetzung mit organischen oder anorganischen Säuren in die entsprechenden protonierten Verbindungen überführt werden. Diese protonierten Verbindungen können z.B. bevorzugt sein, wenn z.B. eine verlangsamte Polyurethan-Reaktion erzielt werden soll oder wenn das Reaktionsgemisch bei der Anwendung ein verbessertes Fließverhalten haben soll.

Als organische Säuren können zum Beispiel alle nachfolgend genannten organischen Säuren, beispielsweise Carbonsäuren mit 1 bis 36 Kohlenstoffatomen (aromatisch oder aliphatisch, linear oder verzweigt), beispielsweise Ameisensäure, Milchsäure, 2-Ethylhexansäure, Salicylsäure und Neodecansäure, oder auch polymere Säuren wie z.B. Polyacryl- oder Polymethacrylsäuren eingesetzt werden. Als anorganische Säuren können z.B. Phosphor-basierende Säuren, Schwefelbasierende Säuren oder Bor-basierende Säuren eingesetzt werden.

Der Einsatz stickstoffhaltigen Katalysatoren, die nicht quaternisiert oder protoniert sind, ist im Sinne dieser Erfindung allerdings besonders bevorzugt.

Geeignete metallhaltige Verbindungen als Katalysatoren, im Folgenden auch als metallhaltige Katalysatoren bezeichnet, im Sinne der vorliegenden Erfindung sind alle metallhaltigen Verbindungen nach dem Stand der Technik, die eine der oben genannten Isocyanat-Reaktionen katalysieren und/oder zur Herstellung von Polyurethanen, insbesondere von Polyurethanschaumstoffen eingesetzt werden können. Sie können zum Beispiel ausgewählt werden aus der Gruppe der metallorganischen oder organometallischen Verbindungen, metallorganischen oder organometallischen Salze, organischen Metallsalze, anorganischen Metallsalze sowie aus der Gruppe der geladenen oder ungeladenen metallhaltigen Koordinationsverbindungen, insbesondere der Metall-Chelat-Komplexe.

Der Ausdruck "metallorganische oder organometallische Verbindungen" umfasst im Sinne dieser Erfindung insbesondere den Einsatz metallhaltiger Verbindungen, die über eine direkte Kohlenstoff-Metall-Bindung verfügen, hier auch als Metallorganyle (z.B. Zinnorganyle) oder organometallische bzw. Organometall-Verbindungen (z.B. Organozinn-Verbindungen) bezeichnet. Der Ausdruck "organometallische oder metallorganische Salze" umfasst im Sinne dieser Erfindung insbesondere den Einsatz von metallorganischen oder organometallischen Verbindungen mit Salzcharakter, das heißt Ionenverbindungen, bei denen entweder das Anion oder Kation von metallorganischer Natur ist (z.B. Organozinn-Oxide, Organozinn-Chloride oder Organozinn-Carboxylate). Der Ausdruck "organische Metallsalze" umfasst im Sinne dieser Erfindung insbesondere den Einsatz von metallhaltigen Verbindungen, die über keine direkte Kohlenstoff-Metall-Bindung verfügen und gleichzeitig Metallsalze sind, bei denen entweder das Anion oder das Kation eine organische Verbindung ist (z.B. Zinn(II)-Carboxylate). Der Ausdruck "anorganische Metallsalze" umfasst im Sinne dieser Erfindung insbesondere den Einsatz von metallhaltigen Verbindungen oder von Metallsalzen, bei denen weder Anion noch Kation eine organische Verbindung ist, z.B. Metall-Chloride (z.B. Zinn(II)-Chlorid), reine oder gemischte, also mehrere Metalle enthaltende, MetallOxide (z.B. Zinn-Oxide) und/oder Metall-Silicate oder -Alumosilicate. Der Ausdruck "Koordinationsverbindung" umfasst im Sinne dieser Erfindung insbesondere den Einsatz von metallhaltigen Verbindungen, die aus einem oder mehreren Zentralteilchen und einem oder mehreren Liganden aufgebaut sind, wobei die Zentralteilchen geladene oder ungeladene Metalle sind (z.B. Metall- bzw. Zinn-Amin-Komplexe). Der Ausdruck "Metall-Chelat-Komplexe" umfasst im Sinne dieser Erfindung insbesondere den Einsatz von metallhaltigen Koordinationsverbindungen, die Liganden mit mindestens zwei Koordinations- oder Bindungsstellen zum Metallzentrum aufweisen (z.B. Metall- bzw. Zinn-Polyamin- oder Metall- bzw. Zinn-Polyether-Komplexe).

Geeignete metallhaltige Verbindungen, insbesondere wie oben definiert, als mögliche Katalysatoren im Sinne der vorliegenden Erfindung können zum Beispiel ausgewählt werden aus allen metallhaltigen Verbindungen enthaltend Lithium, Natrium, Kalium, Magnesium, Calcium, Scandium, Yttrium, Titan, Zirconium, Vanadium, Niob, Chrom, Molybdän, Wolfram, Mangan, Cobalt, Nickel, Kupfer, Zink, Quecksilber, Aluminium, Gallium, Indium, Germanium, Zinn, Blei, und/oder Bismuth, insbesondere Natrium, Kalium, Magnesium, Calcium, Titan, Zirconium, Molybdän, Wolfram, Zink, Aluminium, Zinn und/oder Bismuth, besonders bevorzugt Zinn, Bismuth, Zink und/oder Kalium.

Geeignete metallorganische Salze und organische Metallsalze, insbesondere wie oben definiert, als Katalysatoren im Sinne der vorliegenden Erfindung sind zum Beispiel Organozinn-, Zinn-, Zink-, Bismuth und Kalium-Salze, insbesondere entsprechende Metall-Carboxylate, -Alkoholate, -Thiolate und -Mercaptoacetate, wie zum Beispiel Dibutylzinndiacetat, Dimethylzinndilaurat, Dibutylzinndilaurat (DBTDL), Dioctylzinndilaurat (DOTDL), Dimethylzinndineodecanoat, Dibutylzinndineodecanoat, Dioctylzinndineodecanoat, Dibutylzinndioleat, Dibutylzinn-bis-n-laurylmercaptid, Dimethylzinn-bis-n-laurylmercaptid, Monomethylzinn-tris-2-ethylhexylmercapto-acetat, Dimethylzinn-bis-2-ethylhexylmercaptoacetat, Dibutylzinn-bis-2-ethylhexylmercaptoacetat, Dioctylzinn-bis-isooctylmercaptoacetat, Zinn(II)-acetat, Zinn(II)-2-ethylhexanoat (Zinn(II)-octoat), Zinn(II)-isononanoat (Zinn(II)-3,5,5-trimethylhexanoat), Zinn(II)-neodecanoat, Zinn(II)-ricinoleat, Zinn(II)-oleat, Zink(II)-acetat, Zink(II)-2-ethylhexanoat (Zink(II)-octoat), Zink(II)-isononanoat (Zink(II)-3,5,5-trimethylhexanoat), Zink(II)-neodecanoat, Zink(II)-ricinoleat, Bismuthacetat, Bismuth-2-ethylhexanoat, Bismuthoctoat, Bismuthisononanoat, Bismuthneodecanoat, Kaliumformiat, Kaliumacetat, Kalium-2-ethylhexanoat (Kaliumoctoat), Kalium-isononanoat, Kalium-neodecanoat und/oder Kaliumricinoleat.

Bei der erfindungsgemäßen Herstellung von Polyurethanschaumstoffen kann es bevorzugt sein, die Verwendung von metallorganischen Salzen wie zum Beispiel von Dibutylzinndilaurat auszuschließen.

Geeignete mögliche metallhaltige Katalysatoren werden in der Regel vorzugsweise so ausgewählt, dass sie keinen störenden Eigengeruch aufweisen, toxikologisch im Wesentlichen unbedenklich sind und dass die resultierenden Polyurethansysteme, insbesondere Polyurethanschäume möglichst geringe Katalysator-bedingte Emissionen aufweisen.

Bei der erfindungsgemäßen Herstellung von Polyurethanschaumstoffen, kann es je nach Art der Anwendung, bevorzugt sein, einbaubare/reaktive oder hochmolekulare Katalysatoren zu verwenden. Solche Katalysatoren können zum Beispiel ausgewählt werden aus der Gruppe der metallhaltigen Verbindungen, vorzugsweise aus der Gruppe der Zinn-, Zink-, Bismuth- und/oder Kalium-haltigen Verbindungen, insbesondere aus der Gruppe der Metall-Carboxylate der vorgenannten Metalle wie zum Beispiel die Zinn-, Zink-, Bismuth- und/oder Kaliumsalze der Isononansäure, Neodecansäure, Ricinolsäure und/oder Ölsäure, und/oder aus der Gruppe der stickstoffhaltigen Verbindungen, insbesondere aus der Gruppe der emissionsarmen Amine und/oder der emissionsarmen Verbindungen enthaltend eine oder mehrere tertiäre Amine-Gruppen,

Je nach Anwendung kann es bevorzugt sein, dass bei der erfindungsgemäßen Herstellung von Polyurethanschaumstoffen, ein oder mehrere stickstoffhaltige und/oder metallhaltige Katalysatoren eingesetzt werden. Wenn mehr als ein Katalysator eingesetzt wird, können die Katalysatoren in beliebigen Gemischen untereinander eingesetzt werden. Hierbei können die Katalysatoren einzeln während der Verschäumung, zum Beispiel im Sinne einer Vordosierung im Mischkopf, und/oder als vorgemischte Katalysatorkombination eingesetzt werden.

Der Ausdruck "vorgemischte Katalysatorkombination", im Folgenden auch als Katalysatorkombination bezeichnet, umfasst im Sinne dieser Erfindung insbesondere fertige Mischungen von metallhaltigen Katalysatoren und/oder stickstoffhaltigen Katalysatoren und/oder entsprechenden protonierten und/oder quaternisierten stickstoffhaltigen Katalysatoren sowie optional noch weiterer Inhalts- oder Zusatzstoffen wie zum Beispiel Wasser, organischen Lösungsmittelen, Säuren zur Blockierung der Amine, Emulgatoren, Tenside, Treibmitteln, Antioxidantien, Flammschutzmittel, Stabilisatoren und/oder Siloxanen, vorzugsweise Polyethersiloxanen, die bereits vor der Verschäumung als solche vorliegen und während der Verschäumungsvorgangs nicht als Einzelkomponenten zugegeben werden müssen.

Je nach Anwendung kann es bevorzugt sein, wenn aus der Summe aller eingesetzten stickstoffhaltigen Katalysatoren, gegenüber der Summe der metallhaltigen Katalysatoren, insbesondere Kalium-, Zink- und/oder Zinn-Katalysatoren, ein molares Mengenverhältnis von 1:0,05 bis 0,05:1, vorzugsweise 1:0,07 bis 0,07:1 und besonders bevorzugt 1:0,1 bis 0,1:1 resultiert.

Um eine Reaktion der Komponenten untereinander zu vermeiden, insbesondere Reaktion von stickstoffhaltigen Katalysatoren mit metallhaltigen Katalysatoren, insbesondere Kalium-, Zink- und/oder Zinn-Katalysatoren, kann es bevorzugt sein, diese Komponenten getrennt voneinander zu lagern und dann der Isocyanat- und Polyol-Reaktionsmischung gleichzeitig oder nacheinander zuzuführen.

Geeignete Einsatzmengen an Katalysatoren richten sich nach dem Typ des Katalysators und liegen vorzugsweise im Bereich von 0,005 bis 10,0 pphp, besonders bevorzugt im Bereich von 0,01 bis 5,00 pphp (= Gewichtsteile bezogen auf 100 Gewichtsteile Polyol) bzw. 0,10 bis 10,0 pphp für Kaliumsalze.

Bevorzugte Wasser-Gehalte im erfindungsgemäßen Verfahren hängen davon ab, ob zusätzlich zum ggf. einsetzbaren Wasser noch physikalische Treibmittel eingesetzt werden oder nicht. Bei rein Wasser-getriebenen Schäumen liegen die Werte typischerweise bei vorzugsweise 1 bis 20 pphp, werden zusätzlich andere Treibmittel eingesetzt, verringert sich die Einsatzmenge auf üblicherweise z.B. 0 oder z.B. 0,1 bis 5 pphp. Zur Erlangung hoher Schaumraumgewichte werden vorzugsweise weder Wasser noch andere Treibmittel eingesetzt.

Geeignete, ggf. einsetzbare physikalische Treibmittel im Sinne dieser Erfindung sind Gase, z.B. verflüssigtes CO₂, und leichtflüchtige Flüssigkeiten, z.B. Kohlenwasserstoffe mit 4 oder 5 Kohlenstoff-Atomen, Sauerstoff-haltige Verbindungen wie Methylformiat und Dimethoxymethan, oder Chlorkohlenwasserstoffe, bevorzugt Dichlormethan und 1,2-Dichlorethan. Des Weiteren eignen sich Ketone (z.B. Aceton) oder Aldehyde (z.B. Methylal) als Treibmittel.

Neben oder an Stelle von ggf. Wasser und ggf. physikalischen Treibmitteln, können auch andere chemische Treibmittel, die mit Isocyanaten unter Gasentwicklung reagieren, wie z.B. Ameisensäure, Carbamate oder Carbonate eingesetzt werden.

Geeignete Stabilisatoren gegen oxidativen Abbau, so genannte Antioxidantien, sind vorzugsweise alle gängigen Radikalfänger, Peroxidfänger, UV-Absorber, Lichtstabilisatoren, Komplexbildner für Metallionenverunreinigungen (Metalldeaktivatoren). Bevorzugt einsetzbar sind Verbindungen folgender Substanzklassen, bzw. Substanzklassen enthaltend folgende funktionelle Gruppen, wobei als Substituenten an den jeweiligen Grundkörpern insbesondere diejenigen bevorzugt sind, die gegenüber Isocyanat reaktive Gruppen besitzen: 2-(2'-Hydroxyphenyl)benzotriazole, 2-Hydroxybenzophenone, Benzoesäuren und Benzoate, Phenole, insbesondere enthaltend tert-Butyl- und/oder Methylsubstituenten am Aromaten, Benzofuranone, Diarylamine, Triazine, 2,2,6,6-Tetramethylpiperidine, Hydroxylamine, Alkyl- und Arylphosphite, Sulfide, Zinkcarboxylate, Diketone. Als Phenole können z.B. Ester basierend auf 3-(4-Hydroxyphenyl)propionsäure wie Triethyleneglycol-bis-[3-(3-tert-butyl-4-hydroxy-5-methylphenyl)propionat], Octadecyl-3-(3,5-di-tert-butyl-4-hydroxyphenyl)propionat, oder Methylendiphenole wie 4,4'-Butyliden-bis-(6-tert-butyl-3-methylphenol) eingesetzt werden. Als 2-(2'-Hydroxyphenyl)benzotriazole sind z.B. 2-(2'Hydroxy-5'-methylphenyl)benzotriazol oder 2-(2'Hydroxy-3',5'-di-tert-butylphenyl)benzotriazol bevorzugt. Als 2-Hydroxybenzophenone sind z.B. 2-Hydoxy-4-n-octoxybenzophenon, 2,2',4,4'-tetrahydroxybenzophenon oder 2,4-dihydroxybenzophenon bevorzugt. Als Benzoate sind z.B. Hexadecyl-3,5-di-tert-butyl-4-hydroxybenzoat oder Tannine bevorzugt.

Geeignete Flammschutzmittel im Sinne dieser Erfindung sind alle Substanzen, die nach dem Stand der Technik als dafür geeignet betrachten werden. Bevorzugte Flammschutzmittel sind z.B. flüssige organische Phosphor-Verbindungen, wie halogenfreie organische Phosphate, z.B. Triethylphosphat (TEP), halogenierte Phosphate, z.B. Tris(1-chlor-2-propyl)phosphat (TCPP) und Tris(1,3-dichlorisopropyl)phosphat (TDCPP) und organische Phosphonate, z.B. Dimethylmethanphosphonat (DMMP), Dimethylpropanphosphonat (DMPP), oder Feststoffe wie Ammoniumpolyphosphat (APP) und roter Phosphor. Des Weiteren sind als Flammschutzmittel halogenierte Verbindungen, z.B. halogenierte Polyole, sowie Feststoffe wie Blähgraphit und Melamin geeignet.

Als Biozide können z.B. handelsübliche Produkte verwendet werden, wie Chlorophen, Benzisothiazolin, Hexahydro-1,3,5-tris(hydroxyethyl-s-triazin), Chloromethylisothiazolin, Methylisothiazolin oder 1,6-Dihydroxy-2,5-dioxohexan, die unter den Handelsnamen BIT 10, Nipacide BCP, Acticide MBS, Nipacide BK, Nipacide Cl, Nipacide FC bekannt sind.

Zur Beeinflussung der Schaumeigenschaften von PU-Schäumen können bei deren Herstellung insbesondere Siloxane bzw. organomodifizierte Siloxane eingesetzt werden, wobei die im Stand der Technik genannten Substanzen verwendet werden können. Vorzugsweise werden solche Verbindungen eingesetzt, die für die jeweiligen PU-Schaumtypen (PU-Hartschäume, PU-Heissweichschäume, viskoelastische PU-Schäume, PU-Esterschäume, PU-Kaltweichschäume (HR- PU-Schäume), halbharte PU-Schäume) besonders geeignet sind. Geeignete (organomodifizierte) Siloxane sind z.B. in den folgenden Schriften beschrieben: EP 0839852, EP 1544235, DE 102004001408, EP 0839852, WO 2005/118668, US 20070072951, DE 2533074, EP 1537159 EP 533202, US 3933695, EP 0780414, DE 4239054, DE 4229402, EP 867465. Die Herstellung dieser Verbindungen kann wie im Stand der Technik beschrieben erfolgen. Geeignete Beispiele sind z. B. in US 4147847, EP 0493836 und US 4855379 beschrieben.

Die erfindungsgemäß einzusetzende Komponente (e) wirkt als Schaumstabilisator und Zellöffner.

Als zusätzliche Schaumstabilisatoren können alle aus dem Stand der Technik bekannten Stabilisatoren eingesetzt werden. Nachfolgend werden demgemäß zunächst die zusätzlich einsetzbaren Schaumstabilisatoren beschrieben, deren Einsatz optional ist:
Bevorzugt werden als zusätzliche Schaumstabilisatoren solche auf der Basis von Polydialkylsiloxan-Polyoxyalkylen-copolymeren, wie sie allgemein bei Herstellung von Urethanschaumstoffen verwendet werden, eingesetzt. Diese Verbindungen sind vorzugsweise so aufgebaut, dass z.B. ein langkettiges Copolymerisat aus Ethylen- und Propylenoxid mit einem Polydimethylsiloxanrest verbunden ist. Die Verknüpfung zwischen dem Polydialkylsiloxan und dem Polyetherteil kann dabei über eine SiC-Verknüpfung oder eine Si-O-C-Bindung erfolgen. Strukturell kann der oder können die unterschiedlichen Polyether terminal oder seitenständig an das Polydialkylsiloxan gebunden sein. Der Alkylrest oder die verschiedenen Alkylreste können dabei aliphatisch, cycloaliphatisch oder aromatisch sein. Ganz besonders vorteilhaft sind dabei Methylgruppen. Das Polydialkylsiloxan kann dabei linear sein oder auch Verzweigungen enthalten. Geeignete Schaumstabilisatoren sind sind z.B. in den folgenden Schriften beschrieben: EP 0839852, EP 1544235, DE 102004001408, WO 2005/118668, US 2007/0072951, DE 2533074, EP 1537159 EP 533202, US 3933695, EP 0780414, DE 4239054, DE 4229402, EP 867465. Die Herstellung entsprechenderr Si-Verbindungen kann wie im Stand der Technik beschrieben erfolgen. Geeignete Beispiele sind z. B. in US 4147847, EP 0493836 und US 4855379 beschrieben. Geeignete Stabilisatoren können von der Evonik Industries AG unter dem Handelsnamen TEGOSTAB® bezogen werden.

Geeignete Siloxane, die zusätzlich eingesetzt werden können, haben insbesondere die folgende Struktur:

MₐM¹_{b}D_{c}D¹_{d}TₑQ_{f} Formel (I)

mit 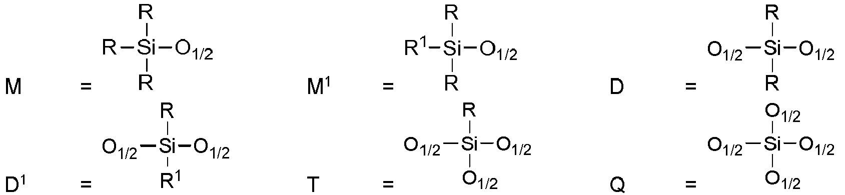
a = 0 - 20, bevorzugt 0 - 10, insbesondere 0 und 2,
b = 0 - 20, bevorzugt 0 - 10, insbesondere 0 - 7,
c = 3 - 450, bevorzugt 5 - 350, insbesondere 10 - 250,
d = 0 - 40, bevorzugt 1 - 30, insbesondere 1,5 - 20,
e = 0 - 20, bevorzugt 0 - 10, insbesondere 0,
f = 0 - 20, bevorzugt 0 - 10, insbesondere 0,
wobei a + b ≥ 2 sowie N = a + b + c + d + e + f ≥ 11 und ≤ 500, b + d ≥ 1
- R =: unabhängig voneinander gleiche oder verschiedene Alkylreste mit 1 - 16 Kohlenstoffatomen oder Arylreste mit 6 - 16 Kohlenstoffatomen oder H oder -OR², bevorzugt Methyl, Ethyl, Phenyl, Oktyl, Dodecyl oder H, insbesondere Methyl,
- R¹ =: unabhängig voneinander gleiche oder verschiedene Polyetherreste, bevorzugt gleiche oder verschiedene Polyetherreste der allgemeinen Formel (II) 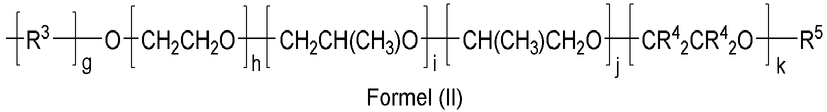
- R² =: unabhängig voneinander gleiche oder verschiedene Alkylreste mit 1 - 16 Kohlenstoffatomen oder Arylreste mit 6 - 16 Kohlenstoffatomen oder H,
- R³ =: gleiche oder verschiedene Kohlenwasserstoffreste mit 1 - 18 Kohlenstoffatomen, bevorzugt -CH₂-CH₂-CH₂- oder - CH₂-CH(CH₃)-CH₂-,
- R⁴ =: gleiche oder verschiedene Alkylreste 1 bis 18 Kohlenstoffatomen, die gegebenenfalls Etherfunktionen besitzen, oder Arylreste mit 6 - 18 Kohlenstoffatomen , die gegebenenfalls Etherfunktionen besitzen, oder H, bevorzugt H, Ethyl und Benzyl,
- R⁵ =: gleiche oder verschiedene Reste aus der Gruppe: R³, -C(O)R³, bevorzugt Methyl, Butyl, H oder-C(O)Me,
- g =: 0 oder 1,
- h =: 0 - 100, bevorzugt 0 - 80, insbesondere bevorzugt 3 - 50,
- i =: 0 - 100, bevorzugt 0 - 80, insbesondere bevorzugt 0 - 50,
- j =: 0 - 100, bevorzugt 0 - 80, insbesondere bevorzugt 0 - 50,
- k =: 0 - 80, bevorzugt 0 - 40, insbesondere bevorzugt 0.
mit der Maßgabe h + i + j + k ≥ 3,

Zur Beschreibung der Siloxane wird hier eine Schreibweise analog der Literatur: Walter Noll, Chemie und Technologie der Silicone, Verlag Chemie GmbH, 2. Auflage, 1968, gewählt. Die erfindungsgemäßen Polyethersiloxane besitzen verschiedenen Siloxaneinheiten, die im Molekül verschiedenartig miteinander kombiniert sein können. Die Zusammensetzung der Siloxaneinheiten ergibt sich unter der Berücksichtigung der Tatsache, dass jedes Sauerstoffatom vorzugsweise als Brückenglied zwischen je zwei Siliziumatomen fungiert und demgemäß jedem Siliziumatom nur zur Hälfte zuzurechnen ist. Die verschiedenen Siloxaneinheiten sind über 2 halbe Sauerstoffatome (-O_{1/2}O_{1/2}-) Gruppen miteinander verknüpft, wodurch eine Sauerstoffbrücke (-O-) dargestellt wird.

Die Herstellung der Siloxane nach Formel (I) kann nach den bekannten Methoden erfolgen, wie z.B. die edelmetallkatalysierte Hydrosilylierungsreaktion von Verbindungen, die eine Doppelbindung enthalten, mit entsprechenden Wasserstoffsiloxanen wie z.B. in EP 1520870, beschrieben. Die Schrift EP 1520870 wird hiermit als Referenz eingeführt und gilt als Teil des Offenbarungsgehaltes der vorliegenden Erfindung.

Im vorangegangenen Teil wurden die zusätzlich einsetzbaren Schaumstabilisatoren beschrieben, die optional einsetzbar sind.

Das erfindungsgemäße Verfahren erfolgt unter Einsatz von SiOC-verknüpften, linearen Polydialkylsiloxan-Polyoxyalkylen-Blockcopolymeren mit sich wiederholenden (AB)-Einheiten, erhältlich durch Umsetzung von Polyetherdiolen mit äquilibrierten, vorzugsweise endäquilibrierten, α,ω-Diacetoxypolydialkylsiloxanen. In der noch nicht veröffentlichten europäischen Patentanmeldung mit dem Aktenzeichen 18189072.4 ist eine entsprechende Umsetzung zur Bereitstellung von Komponente (e) genau beschrieben. Diese Umsetzung erfolgt unter Hinzufügen einer festen, flüssigen oder gasförmigen Base gegebenenfalls unter Einsatz inerter Lösungsmittel.

Wie die Komponente (e) erhalten werden kann, wird nicht nur in der noch nicht veröffentlichten europäischen Patentanmeldung mit dem Aktenzeichen 18189072.4 grundsätzlich beschrieben, sondern auch nachfolgend für die Zwecke der vorliegenden Erfindung genau erläutert. Der nachfolgende Teil betrifft somit die Bereitstellung von Komponente (e). In der noch nicht veröffentlichten europäischen Patentanmeldung mit dem Aktenzeichen 18189072.4 wurde gefunden, dass man trifluormethansulfonsaure äquilibrierte α,ω-Diacetoxysiloxane durch die Umsetzung von Siloxancyclen (D₄ und/oder D₅) mit Acetanhydrid in Gegenwart von Trifluormethansulfonsäure herstellen kann, wie die Lehre der noch nicht offengelegten europäischen Anmeldungen mit den Aktenzeichen EP18189075.7 und EP18189074.0 offenbart. In der noch nicht veröffentlichten europäischen Patentanmeldung mit dem Aktenzeichen 18189072.4 wurde festgestellt, dass trifluormethansulfonsaure, äquilibrierte α,ω-Diacetoxysiloxane, und zwar insbesondere solche wie in EP18189075.7 und EP18189074.0 beschrieben, eine derartig hohe Reaktivität besitzen, dass man bei deren Umsetzung mit α,ω-Polyetherdiolen zu den anspruchsvollen, hochmolekularen SiOC-verknüpften A(BA)ₙ-Strukturen gelangt. Trifluormethansulfonsaure äquilibrierte α,ω-Diacetoxypolydialkylsiloxane sind dadurch erhältlich, dass man zyklische Siloxane, insbesondere umfassend D₄ und/ oder D₅, unter Einsatz von Trifluormethansulfonsäure als Katalysator mit Acetanhydrid umsetzt. Die Trifluormethansulfonsäure wird dabei vorzugsweise in Mengen von 0,1 bis 0,3 Massenprozent, bezogen auf die aus Acetanhydrid und zyklischen Siloxanen bestehende Reaktionsmatrix, eingesetzt. Die Umsetzung wird vorzugsweise im Temperaturbereich von 140 bis 160°C und vorzugsweise in einem Zeitraum von 4 bis 8 Stunden durchgeführt. Die resultierenden äquilibrierten, vorzugsweise endäquilibrierten, α,ω-Diacetoxy-polydialkylsiloxane können dann mit Polyetherdiol-(en) unter Hinzufügen einer festen, flüssigen oder gasförmigen Base zur Umsetzung gebracht werden gegebenenfalls unter Einsatz inerter Lösungsmittel. Durch diese Umsetzung gelangt man zu SiOC-verknüpften, linearen Polydialkylsiloxan-Polyoxyalkylen-Blockcopolymeren mit sich wiederholenden (AB)-Einheiten. Solche Umsetzungsprodukte können im Rahmen der vorliegenden Erfindung als Komponente (e) eingesetzt werden. Bevorzugt einzusetzende einfache Basen sind zum Beispiel Alkali- bzw. Erdalkali-Carbonate und/ oder -Hydrogencarbonate und/ oder gasförmiger Ammoniak und/oder Amine. Der bekannten Kondensationsneigung von Acetoxysiloxanen Rechnung tragend, sind dabei ganz besonders bevorzugt solche Basen, die auf Grund ihrer chemischen Zusammensetzung kein Wasser in das Reaktionssystem eintragen. Somit haben wasserfreie Carbonate vor Hydrogencarbonaten und Hydratwasser-freie vor Hydratwasser-enthaltenden Basen jeweils den Vorzug. Die Schwerlöslichkeit der Alkali- bzw. Erdalkali-Carbonate und/ oder -Hydrogencarbonate im Reaktionssystem berücksichtigend, wählt man von diesen vorteilhafterweise höhere Überschüsse, die vorzugsweise mindestens dem 2000-fachen stöchiometrischen Äquivalent der im α,ω-Diacetoxypolydialkylsiloxan enthaltenen Trifluormethansulfonsäure entsprechen. Ganz besonders bevorzugt ist die Verwendung gasförmigen Ammoniaks als Base, so dass die bei der Reaktion freiwerdende Essigsäure als Ammoniumacetat gebunden wird. Die Menge der in das Reaktionssystem eingetragenen festen, flüssigen oder gasförmigen Base wird vorzugsweise so bemessen, dass sie sowohl für die Neutralisation der im System ggf. noch vorhandenen Trifluormethansulfonsäure, als auch der Salzfällung der am Siloxan gebundenen Acetatgruppen sowie der Fällung des noch im Reaktionssystem vorhandenen Acetanhydrids sowie gegebenenfalls freier Essigsäure dient. Die Reaktion wird vorteilhafterweise bei Temperaturen zwischen 20 bis 120°C, vorzugsweise zwischen 20 und 70°C über die Dauer von 1 bis 10, vorzugsweise mindestens über die Dauer von 1 bis 3 Stunden durchgeführt. Man kann das ggf. trifluormethansulfonsaure, äquilibrierte, vorzugsweise endäquilibrierte, α,ω-Diacetoxy-polydialkylsiloxan mit Polyetherdiol-(en) bei Temperaturen von < 25°C unter Rühren vorlegen und dann Ammoniak einleiten. Diese unter starkem Ammoniakeinsatz gefahrene Ausgestaltungsvariante bindet neben im Reaktionssystem ggf. noch vorhandener Trifluormethansulfonsäure, Acetanhydrid und gegebenenfalls freie Essigsäure als Ammoniumacetat. Die Reaktion wird vorzugsweise bei Temperaturen zwischen 20 und 70°C über die Dauer von vorzugsweise 1 bis 3 Stunden durchgeführt. Gemäß einer besonders bevorzugten Ausgestaltungsform wird das ggf. trifluormethansulfonsaure, äquilibrierte, vorzugsweise endäquilibrierte, α,ω-Diacetoxy-polydialkylsiloxan noch vor der Umsetzung mit Polyetherdiol-(en) mit Base, insbesondere mit Ammoniak, behandelt. Die auf diese Weise mit Base, insbesondere Ammoniak, nachbehandelten α,ω-Diacetoxypolydialkylsiloxane sind dann jedenfalls nicht mehr trifluormethansulfonsauer und werden erst danach mit Polyetherdiol-(en) in Gegenwart einer festen, flüssigen oder gasförmigen Base umgesetzt, ggf. unter Einsatz inerter Lösungsmittel, um zu den SiOC-verknüpften, linearen Polydialkylsiloxan-Polyoxyalkylen-Blockcopolymeren mit sich wiederholenden (AB)-Einheiten, also der Komponente (e), zu gelangen, und ebensolche Umsetzungsprodukte, die auf dem Einsatz dementsprechend mit Base nachbehandelter äquilibrierter, vorzugsweise endäquilibrierter, α,ω-Diacetoxypolydialkylsiloxane basieren, werden im Rahmen der vorliegenden Erfindung besonders bevorzugt als Komponente (e) eingesetzt. Von erheblicher Bedeutung für das Erreichen einer hochmolekularen SiOC-verknüpften A(BA)ₙ-Polyethersiloxanstruktur erweist sich grundsätzlich auch die Qualität des eingesetzten α,ω-Diacetoxypolydialkylsiloxans. Die Gewährleistung eines perfekten Äquilibrierergebnisses im α,ω-Diacetoxypolydialkylsiloxan begünstigt den Aufbau hochmolekularer SiOC-verknüpfter A(BA)ₙ-Polyethersiloxanstruktur sehr. Mit dem Begriff "endäquilibriert" ist daher gemeint, dass das Äquilibriergleichgewicht erreicht worden ist, das sich bei einer Temperatur von 23°C und einem Druck von 1013,25 hPa einstellt. Als Indikator für das Erreichen des zuvor genannten Äquilibriergleichgewichtes wird der gaschromatographisch bestimmte Gesamtcylengehalt, definiert als die Summe der D₄-, D₅-, D₆-Gehalte bezogen auf die Siloxanmatrix, bestimmt nach der Derivatisierung der α,ω-Diacetoxypolydialkylsiloxane zu den entsprechenden α,ω-Diisopropoxypolydialkylsiloxanen, herangezogen. Die Derivatisierung zu den α,ω-Diisopropoxypolydialkylsiloxanen wird hierbei bewusst gewählt, um eine unter den Bedingungen der gaschromatographischen Analyse gegebenenfalls erfolgende, thermisch induzierte Rückspaltungsreaktion der α,ω-Diacetoxypolydialkylsiloxane zu verhindern (zur Rückspaltungsreaktion siehe u.a. J. Pola et al., Collect. Czech. Chem. Commun. 1974, 39(5), 1169-1176 und auch W. Simmler, Houben-Weyl, Methods of Organic Chemistry, Vol. VI/2, 4th Edition, O-Metal Derivates of Organic Hydroxy Compounds S. 162 ff)). Deshalb sollte der darin enthaltene Gesamtcyclengehalt definiert als Summe der Gehaltsanteile der zyklischen Siloxane umfassend D₄, D₅ und D₆ bezogen auf die Siloxanmatrix bevorzugt kleiner 13 Gewichtsprozent, besonders bevorzugt kleiner 12 Gewichtsprozent an der aus α,ω-Diisopropoxypolydialkylsiloxanen bestehenden Siloxanmatrix aufweisen. Äquilibrierte α,ω-Diacetoxypolydialkylsiloxane dieser Qualität, also endäquilibrierte α,ω-Diacetoxypolydialkylsiloxane, können sehr vorteilhaft, das heißt auch nach sehr kurzer Reaktionszeit, durch die Umsetzung von Siloxancyclen (insbesondere umfassend D₄ und/oder D₅) mit Acetanhydrid in Gegenwart von Trifluormethansulfonsäure und Essigsäure hergestellt werden. Essigsäure wird dabei vorzugsweise in Mengen von 0,4 bis 3,5 Gewichtsprozent, bevorzugt 0,5 bis 3 Gewichtsprozent, weiter bevorzugt 0,8 bis 1,8 Gew-%, besonders bevorzugt in Mengen von 1,0 bis 1,5 Gew.% bezogen auf die Reaktionsmatrix bestehend aus Acetanhydrid und zyklischen Siloxanen hinzugesetzt. Die Bereitstellung von entsprechend einsetzbaren endäquilibrierten α,ω-Diacetoxypolydialkylsiloxanen wird exemplarisch in Beispiel 1 der noch nicht veröffentlichten europäischen Patentanmeldung mit dem Aktenzeichen 18189072.4 beschrieben. Da der Polymerisationsgrad des linearen Polydialkylsiloxan-Polyoxyalkylen-Blockcopolymeren insbesondere für dessen tensidische Wirksamkeit in Polyurethan-Etherschäumen qualitätsdeterminierend ist, kommt der Reaktionsverfolgung eine wichtige Rolle zu. Bewährt hat sich hierbei die Methode, über die Reaktionszeit hinweg Proben aus der Reaktionsmatrix zu ziehen, die man dann zum Beispiel mit Hilfe der ²⁹Si-NMR und/ oder ¹³C-NMR-Spektroskopie analysiert. Die Abnahme des Integrals der für die Präsenz von Acetoxydimethylsiloxygruppen -OSi(CH₃)₂OCOCH₃ charakteristischen Signallagen geht mit dem beabsichtigten Molmassenaufbau des A(BA)ₙ strukturierten Copolymers einher und ist ein verlässlicher Indikator für den erzielten Reaktionsumsatz.

Der gerade vorangegangene Teil erläuterte die Bereitstellung der Komponente (e), nämlich der SiOC-verknüpften, linearen Polydialkylsiloxan-Polyoxyalkylen-Blockcopolymeren mit sich wiederholenden (AB)-Einheiten, erhältlich durch Umsetzung von Polyetherdiolen mit äquilibrierten, vorzugsweise endäquilibrierten, α,ω-Diacetoxypolydialkylsiloxanen. Diese Umsetzung erfolgt wie beschrieben unter Hinzufügen einer festen, flüssigen oder gasförmigen Base gegebenenfalls unter Einsatz inerter Lösungsmittel. Auf diese Weise können die Strukturen erhalten werden, die als Komponente (e) im Rahmen der vorliegenden Erfindung eingesetzt werden.

Gemäß einer bevorzugten Ausgestaltung werden zur Bereitstellung der Komponente (e) als inerte Lösungsmittel Alkane, Cycloalkane, Alkylaromaten, endverschlossene Polyether und/oder Emollientester, wie den von Laurinsäure, Myristinsäure, Palmitinsäure, Stearinsäure, Ölsäure, Isostearinsäure, Ricinolsäure, und Behenilsäure hergeleiteten Estern kombiniert mit Cetyl-, Stearyl-, Isostearyl-, Oleyl-, Octyldodecyl-, Myristyl- und Behenyl-Alkohol oder Glyzerin, vorzugsweise Myristylmyristat, verwendet.

Die Siloxanblöcke (A) der Blockcopolymeren (also Komponente (e)) sind gemäß einer bevorzugten Ausführungsform der Erfindung lineare Siloxanpolymere oder Ketten mit sich wiederholenden Siloxaneinheiten, die durch die Formel (-(R)₂SiO-)_{y}, wobei R = unabhängig voneinander gleiche oder verschiedene Alkylreste mit 1 - 16 Kohlenstoffatomen oder Arylreste mit 6 - 16 Kohlenstoffatomen, bevorzugt Methyl, Ethyl, Phenyl, Oktyl, Dodecyl oder H, insbesondere Methyl ist, dargestellt werden können.

Der Polyoxyalkylenblock (B) der linearen Blockcopolymeren (also Komponente (e)) ist gemäß einer bevorzugten Ausführungsform der Erfindung ein Oxyalkylenpolymer enthaltend die sich wiederholenden Oxyalkyleneinheiten, hier insbesondere die Oxyethylen- und Propenyloxyeinheiten.

Das gewichtsmittlere Molekulargewicht jedes Siloxanblocks (A) der linearen Blockcopolymeren (also Komponente (e)) liegt gemäß einer bevorzugten Ausführungsform zwischen 650 bis 6500 g/mol, vorzugsweise 700 bis 2500 g/mol, besonders bevorzugt bei 900 bis 1500 g/mol.

Das gewichtsmittlere Molekulargewicht jedes Siloxanblocks (A) liegt gemäß einer bevorzugten Ausführungsform zwischen 650 bis 6500 g/mol, vorzugsweise 700 bis 2500 g/mol, besonders bevorzugt bei 900 bis 1500 g/mol.

Das gewichtsmittlere Molekulargewicht jedes Polyoxyalkylenblocks der so hergestellten Mischpolymeren liegt gemäß einer bevorzugten Ausführungsform zwischen 600 und 10.000 g/mol, vorzugsweise 1.000 bis 5.000 g/mol.

Die Größe der einzelnen Oxyalkyleneinheiten oder Siloxanblöcke ist nicht notwendigerweise einheitlich, sondern kann innerhalb der angegebenen Grenzen beliebig variieren.

Die einzelnen Polyoxyalkyleneinheiten sind gemäß einer bevorzugten Ausführungsform der Erfindung Additionsprodukte aus mindestens einem Oxyalkylenmonomer, ausgesucht aus der Gruppe Ethylenoxid, Propylenoxid, Butylenoxid Tetrahydrofuran, vorzugsweise Mischprodukte aus mindestens zwei Monomereinheiten, insbesondere aus Ethylenoxid und Propylenoxid.

Die Polyoxyalkylenblöcke bestehen gemäß einer bevorzugten Ausführungsform im Wesentlichen aus Oxyethyleneinheiten oder Oxypropyleneinheiten, bevorzugt sind gemischte Oxyethylen- und Oxypropyleneinheiten mit einem Oxyethylenanteil von etwa 30 bis 70 Gewichtsprozent und 70 bis 30 Gewichtsprozent Oxypropylenanteil bezogen auf den Gesamtgehalt an Oxyalkyleneinheiten im Block.

Gemäß einer bevorzugten Ausführungsform beträgt der gesamte Siloxanblockanteil (A) im Copolymer zwischen 15 und 50 Gewichtsprozent, vorzugsweise 20 bis 40 Gew.-%, und der Anteil der Polyoxyalkylenblöcke zwischen 80 und 50 Gew.-%. Das Blockcopolymer weist gemäß einer bevorzugten Ausführungsform ein mittleres gewichtsgemitteltes Molekulargewicht Mw von mindestens 10.000 g/mol bis ca. 200.000 g/mol, vorzugsweise 25.000 g/mol bis ca. 180.000 g/mol, insbesondere 60.000 g/mol bis ca. 120.000 g/mol auf.

Die Ermittlung der mittleren Molekulargewichte basiert auf den bekannten Methoden der GPC-Analytik, wobei Polystyrol als Standard verwendet wird.

Das molare Verhältnis von α,ω-Diacetoxysiloxanen zu Polyetherdiolen liegt gemäß einer bevorzugten Ausführungsform im Bereich von 0,90 bis 1,10, bevorzugt im Bereich 0,95 bis 1,05 besonders bevorzugt im Bereich 0,99 bis 1,01. Für den Fachmann erschließt sich ohne Weiteres, dass sich der erzielbare Polymerisationsgrad an das Erreichen einer nahezu perfekten Stöchiometrie der Reaktanden knüpft.

Die Bereitstellung der Komponente (e) wird gemäß einer bevorzugten Ausführungsform ausgeführt durch Umsetzung von äquilibrierten, vorzugsweise endäquilibrierten, Acetoxy-Si-Einheiten enthaltenden Polyorganosiloxanen der allgemeinen Formel (III) 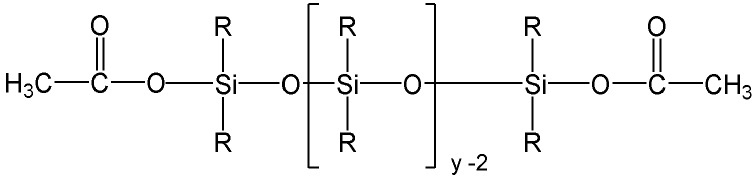 worin bedeuten:
- R =: unabhängig voneinander gleiche oder verschiedene Alkylreste mit 1 - 16 Kohlenstoffatomen oder Arylreste mit 6 - 16 Kohlenstoffatomen, bevorzugt Methyl, Ethyl, Phenyl, Oktyl, Dodecyl oder H, insbesondere Methyl,
- y =: 8 bis 80, vorzugsweise 10 bis 50, besonders bevorzugt 10 bis 25, mit wenigstens einem Alkohol, der ausgewählt ist aus der Gruppe der Polyetherdiole mit der allgemeinen Formel (IV)

HO-(CₙH₍₂ₙ₋ₘ₎R¹ₘO-)ₓ-H

worin
R¹ = gleiche oder verschiedene Alkylreste 1 bis 18 Kohlenstoffatomen, die gegebenenfalls Etherfunktionen besitzen, oder Arylreste mit 6 - 18 Kohlenstoffatomen , die gegebenenfalls Etherfunktionen besitzen, bevorzugt Methyl, Ethyl und Benzyl, insbesondere Methyl
n = 2 bis 4,
m = 0 oder 1,
x = einen Wert von 1 bis 200, vorzugsweise 10 bis 100, insbesondere 35 bis 60, hat, wobei die Oxyalkylensegmente - (CₙH₍₂ₙ₋ₘ₎R¹ₘO-) innerhalb eines Oxyalkylenetherrestes untereinander verschieden sein können, sowie die Reihenfolge der einzelnen Segmente -(CₙH₍₂ₙ₋ₘ₎R¹ₘO-) beliebig sein kann und insbesondere Blockcopolymere, statistische Polymere sowie deren Kombinationen umfasst.

Erfindungsgemäß bevorzugt sind Polyetherdiole, in denen Ethylenoxid (EO) und Propylenoxyd (PO) als Copolymerisate vorliegen. Besonders bevorzugt sind EO/PO-Copolymerisate, die blockartigen Aufbau besitzen und einen EO-Anteil von ca. 30 bis 70 Gew.-%, bezogen auf den Gesamtgehalt an Oxyalkyleneinheiten, enthalten.

Die Herstellung dieser SiOC-verknüpften, linearen Polydialkylsiloxan-Polyoxyalkylen-Blockcopolymeren (Komponente (e)) kann wahlweise mit oder ohne den Einsatz eines geeigneten Lösungsmittels erfolgen, aber jedenfalls unter Hinzufügen einer festen, flüssigen oder gasförmigen Base. Werden hochmolekulare und damit einhergehend hochviskose SiOC-verknüpfte Copolymere angestrebt, so kann deren Herstellung im Sinne ihrer guten Handhabbarkeit während und nach der Synthese zweckmäßigerweise durch die Umsetzung des jeweiligen Polyetherdiols mit dem jeweiligen α,ω-Acetoxysiloxan in einem geeigneten Lösungsmittel stattfinden. Geeignete Solventien sind Alkane, Cycloalkane, Alkylaromaten, endverschlossene Polyether aber auch Emollientester wie Myristylmyristat u.ä., wobei insbesondere hochsiedende Lösungsmittel mit Siedepunkten > 120°C bevorzugt sind.

Es wurde gefunden, dass man die zügige und vollständige Umsetzung der äquilibrierten α,ω-Diacetoxypolydialkylsiloxanen mit Polyetherdiolen unter Vermeidung von Verfärbungen des Reaktionsproduktes in Gegenwart von Basen wie insbesondere Ammoniak durchführt. Der Einsatz von Ammoniak entspricht einer besonders bevorzugten Ausführungsform.

Eine andere erfindungsgemäß bevorzugte Ausführungsform sieht vor, in dem zur Verknüpfung vorgesehenen Polyetherol respektive Polyetherolgemisch bereits unter Rühren Base(n) vorzulegen, bevor man das äquilibrierte α,ω-Diacetoxy-polydialkylsiloxan hinzufügt. Diese Reaktion wird vorzugsweise bei Temperaturen zwischen 50 bis 90°C und vorzugsweise über die Dauer von 2 bis 6 Stunden durchgeführt.

Bevorzugt einzusetzende einfache Basen sind zum Beispiel Alkali- bzw. Erdalkali-Carbonate und/ oder -Hydrogencarbonate und/ oder gasförmiger Ammoniak und/ oder Amine. Der bekannten Kondensationsneigung von Acetoxysiloxanen Rechnung tragend, sind dabei ganz besonders bevorzugt solche Basen, die auf Grund ihrer chemischen Zusammensetzung kein Wasser in das Reaktionssystem eintragen. Somit haben wasserfreie Carbonate vor Hydrogencarbonaten und Hydratwasser-freie vor Hydratwasser-enthaltenden Basen jeweils den Vorzug.

Die Reaktionstemperatur zur Herstellung der erfindungsgemäßen Copolymeren (entspricht der Komponente (e)) sollte gemäß einer bevorzugten Ausführungsform bei 20°C bis 120°C, bevorzugt bei 20°C bis 70°C, liegen.

Die vorstehenden Betrachtungen zur Komponente (e) stützen sich auch auf die noch nicht veröffentlichte europäische Patentanmeldung mit dem Aktenzeichen 18189072.4. Insbesondere sei auf die dort offenbarten Beispiele sei vollumfänglich verwiesen.

Ein weiterer Gegenstand der Erfindung ist eine Zusammensetzung zum Einsatz bei der Herstellung von PU-Schaumstoffen, vorzugsweise von PU-Weichschaum, HR-PU-Schaum, PU-Hypersoft-Schaum oderviskoelastischem PU-Schaum, insbesondere viskoelastischem PU-Schaum, wobei sie SiOC-verknüpftes, lineares Polydialkylsiloxan-Polyoxyalkylen-Blockcopolymer mit sich wiederholenden (AB)-Einheiten, hergestellt durch Umsetzung von Polyetherdiolen mit äquilibrierten, vorzugsweise endäquilibrierten, α,ω-Diacetoxypolydialkylsiloxanen, umfasst, insbesondere nach den Maßgaben, wie zuvor in der Beschreibung angegeben. Insbesondere für das SiOC-verknüpfte, lineare Polydialkylsiloxan-Polyoxyalkylen-Blockcopolymer mit sich wiederholenden (AB)-Einheiten gilt das zuvor geschriebene Wort.

Die Siloxane können im Rahmen der vorliegenden Erfindung auch als Teil von Zusammensetzungen mit verschiedenen Trägermedien eingesetzt werden. Als Trägermedien kommen beispielweise Glykole, wie z.B. Monoethylenglycol (MEG), Diethylenglycol (DEG), Propylenglycol (PG) oder Dipropylenglycol (DPG), Alkoxylate oder Öle synthetischer und/oder natürlicher Herkunft in Frage.

Gemäß einer bevorzugten Ausführungsform der Erfindung umfasst die vorgenannte Zusammensetzung zum Einsatz bei der Herstellung von PU-Schaumstoffen Trägermedien, insbesondere wie zuvor genannt.

Bevorzugt wird zur Herstellung der PU-Schaumstoffe so viel Siloxan zugegeben, dass der Massenanteil an Gesamt-Siloxan bezogen auf den resultierenden Polyurethanschaum von 0,0001 bis 10 Gew.-%, vorzugsweise 0,01 bis 6 Gew.-%, insbesondere 0,05 bis 5 Gew.-% beträgt.

In einer bevorzugten Ausführungsform handelt es sich bei den erfindungsgemäßen bzw. erfindungsgemäß hergestellten PU-Schaumstoffen um offenzellige PU-Schaumstoffe, insbesondere PU-Weichschaumstoffe, besonders bevorzugt viskoelastischen PU-Schaum.

Die erfindungsgemäße Herstellung von PU-Schaumstoffen kann nach allen dem Fachmann geläufigen Verfahren erfolgen, z.B. im Handmischverfahren oder bevorzugt mit Hilfe von Hochdruck- oder Niederdruck-Verschäumungsmaschinen. Das erfindungsgemäße Verfahren kann kontinuierlich oder diskontinuierlich durchgeführt werden. Eine diskontinuierliche Durchführung des Verfahrens ist bevorzugt bei der Herstellung von Formschäumen, Kühlschränken, Schuhsohlen oder Paneelen. Eine kontinuierliche Verfahrensführung ist bei der Herstellung von Dämmplatten, Metallverbundelementen, Blöcken oder bei Sprühverfahren bevorzugt.

Eine besonders bevorzugte Zusammensetzung zur Herstellung von Polyurethan- bzw. Polyisocyanurat-Schaum im Sinne der vorliegenden Erfindung weist ein Raumgewicht (RG) von vorzugsweise 5 bis 800, insbesondere 5 bis 300, bevorzugt 5 bis 150, besonders bevorzugt von 10 bis 90 kg/m³ auf und hat insbesondere die folgende Zusammensetzung:

| Komponente | Gewichtsanteil |
|---|---|
| Polyol | 100 |
| (Amin-)Katalysator | 0,05 bis 5 |
| Kalium-Trimerisierungskatalysator | 0 bis 10 |
| Siloxan (gesamt) | 0,01 bis 25, vorzugsweise 0,1 bis 20 |
| Wasser | 0 bis < 25, vorzugsweise 0,1 bis 15 |
| Treibmittel | 0 bis 130 |
| Flammschutzmittel | 0 bis 70 |
| Füllstoffe | 0 bis 150 |
| weitere Additive | 0 bis 20 |
| Isocyanat-Index: | größer 15 |

In einer bevorzugten Ausführungsform der Erfindung zeichnet sich das Verfahren dadurch aus, dass der PU-Schaumstoff ein PU-Hartschaum, ein PU-Weichschaum, ein viskoelastischer PU-Schaum, ein HR-PU-Schaum, ein PU-Hypersoft-Schaum, ein halbharter PU-Schaum, ein thermoverformbarer PU-Schaum oder ein PU-Integralschaum, bevorzugt ein PU-Weichschaum, HR-PU-Schaum, PU-Hypersoft-Schaum oder viskoelastischer PU-Schaum, insbesondere ein viskoelastischer PU-Schaum ist.

In einer bevorzugten Ausführungsform der Erfindung erfolgt die Umsetzung zur Herstellung der PU-Schaumstoffe unter Einsatz von
f) Wasser, und/oder
g) einem oder mehreren organischen Lösungsmitteln, und/oder
h) einem oder mehreren Stabilisatoren gegen oxidativen Abbau, insbesondere Antioxidantien, und/oder
i) einem oder mehreren Flammschutzmitteln, und/oder
j) weiteren Schaumstabilisatoren, die ungleich Komponente (e) sind, auf der Basis von Siloxanen und/oder Polydialkylsiloxan-Polyoxyalkylen-Copolymeren,
   und/oder
k) einem oder mehreren weiteren Zusatzstoffen, vorzugsweise ausgewählt aus der Gruppe der Tenside, Biozide, Farbstoffe, Pigmente, Füllstoffe, Antistatik-Additive, Vernetzer, Kettenverlängerer, Zellöffner, und/oder Duftstoffe.

Ein weiterer Gegenstand der Erfindung ist ein Polyurethanschaum, vorzugsweise PU-Hartschaum, PU-Weichschaum, viskoelastischer PU-Schaum, HR-PU-Schaum, PU-Hypersoft-Schaum, halbharter PU-Schaum, thermoverformbarer PU-Schaum oder PU-Integralschaum, bevorzugt PU-Weichschaum, HR-PU-Schaum oder viskoelastischer PU-Schaum, insbesondere ein viskoelastischer PU-Schaum, welcher durch ein Verfahren, wie zuvor beschrieben, erhältlich ist.

Ein weiterer Gegenstand der Erfindung ist eine Matratze und/oder Kissen, umfassend einen Polyurethanschaum, insbesondere viskoelastischen Polyurethanweichschaum, hergestellt unter Einsatz von SiOC-verknüpften, linearen Polydialkylsiloxan-Polyoxyalkylen-Blockcopolymeren mit sich wiederholenden (AB)-Einheiten, erhältlich durch Umsetzung von Polyetherdiolen mit äquilibrierten, vorzugsweise endäquilibrierten, α,ω-Diacetoxypolydialkylsiloxanen,
vorzugsweise erhalten durch ein Verfahren und/oder unter Einsatz einer Zusammensetzung jeweils wie in der vorangegangenen Beschreibung erläutert,
wobei, im Falle eines viskoelastischen Polyurethanweichschaums, dieser vorzugsweise eine Glasübergangstemperatur zwischen -20 und +15 °C und/oder eine Stauchhärte CLD, 40 % nach DIN EN ISO 3386-1:2015-10 von 0,1 - 5,0 kPa, insbesondere 0,5 - 3,0 kPa, und/oder eine Rückprallelastizität von < 10 %, gemessen nach DIN EN ISO 8307:2008-03, und/oder ein Raumgewicht von 30 bis 130 kg/m3 und/oder eine Porosität, vorzugsweise nach Aufdrücken des Schaumes, von 1 bis 250, insbesondere 1 bis 50 mm Wassersäule aufweist. Insbesondere für das SiOC-verknüpfte, lineare Polydialkylsiloxan-Polyoxyalkylen-Blockcopolymer mit sich wiederholenden (AB)-Einheiten gilt das zuvor geschriebene Wort.

Die erfindungsgemäße Matratze und/oder Kissen weist im Rahmen einer bevorzugten Ausführungsform eine Höhe von mindestens 1 cm bis maximal 50 cm auf, sowie eine Breite von mindestens 20 cm bis maximal 300 cm, vorzugsweise mindestens 70 cm bis maximal 200 cm, sowie eine Länge von mindestens 20 cm bis maximal 300 cm, vorzugsweise von mindestens 150 cm bis maximal 220 cm.

Ein weiterer Gegenstand der Erfindung ist die Verwendung von PU-Schäumen, wie zuvor beschrieben, als Kühlschrankisolierung, Dämmplatte, Sandwichelement, Rohrisolation, Sprühschaum, 1- & 1,5-Komponenten-Dosenschaum, Holzimitat, Modellschaum, Blumensteckschaum, Verpackungsschaum, Matratze, Möbelpolster, Möbelformschaum, Kopfkissen, "Rebonded Foam", Schwammschaum, Automobil-Sitzpolster, Kopfstütze, Instrumententafel, Automobil-Innenverkleidung, Automobil-Dachhimmel, Schallabsorptionsmaterial, Lenkrad, Schuhsohle, Teppichrückseitenschaum, Filterschaum, Dichtschaum, Dichtmittel und Kleber oder zur Herstellung entsprechender Produkte.

Ein weiterer Gegenstand der Erfindung ist Verwendung von SiOC-verknüpften, linearen Polydialkylsiloxan-Polyoxyalkylen-Blockcopolymeren mit sich wiederholenden (AB)-Einheiten, erhältlich durch Umsetzung von Polyetherdiolen mit äquilibrierten, vorzugsweise endäquilibrierten, α,ω-Diacetoxypolydialkylsiloxanen, zur Verbesserung des Emissionsverhalten und der Geruchsneutralität von PU-Schaumstoffen, bevorzugt PU-Weichschaum, HR-PU-Schaum, PU-Hypersoft-Schaum oder viskoelastischer PU-Schaum , insbesondere von viskoelastischem PU-Schaum.

Ein weiterer Gegenstand der Erfindung ist die Verwendung von SiOC-verknüpften, linearen Polydialkylsiloxan-Polyoxyalkylen-Blockcopolymeren mit sich wiederholenden (AB)-Einheiten, erhältlich durch Umsetzung von Polyetherdiolen mit äquilibrierten, vorzugsweise endäquilibrierten, α,ω-Diacetoxypolydialkylsiloxanen, zur Reduktion der VOC-Emissionen von PU-Schaumstoffen, bevorzugt PU-Weichschaum, HR-PU-Schaum, PU-Hypersoft-Schaum oder viskoelastischer PU-Schaum, insbesondere viskoelastsichem PU-Schaum.

Auch für die vorgenannten Verwendungen gilt insbesondere mit Blick auf das SiOC-verknüpfte, lineare Polydialkylsiloxan-Polyoxyalkylen-Blockcopolymer mit sich wiederholenden (AB)-Einheiten das zuvor geschriebene Wort.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

Beispiele:

### Herstellung der Additive:

### Beispiel 1 (erfindungsgemäß):

In einem 250-ml-Vierhalskolben, ausgerüstet mit KPG-Rührer, Kontaktthermometer und Wasserabscheider werden 56,1 g (0,02 mol) eines aus Ethylenoxid- und Propylenoxid-Einheiten aufgebauten Polyetherdiols einer mittleren Molmasse von ca. 2800 g/mol und einem Propylenoxidanteil von 40 Massenprozent mit 91,3 g Toluol versetzt und bei 120°C azeotrop getrocknet. Nach dem Abkühlen werden 35,2 g (0,029 mol) eines α,ω-Acetoxysiloxans einer mittleren Kettenlänge von N=15 (²⁹Si-NMR-Analytik) hinzugegeben und dann wird unter Rühren im Laufe von 3 Stunden ein mäßiger Strom trockenen Ammoniaks eingeleitet. Anschließend werden die entstandenen Salze mit Hilfe einer Filterpresse abgetrennt. Das erhaltene klare Filtrat wird bei 150°C Sumpftemperatur und einem angelegten Hilfsvakuum von < 1 mbar am Rotationsverdampfer auf etwa 75% seines ursprünglichen Volumens eingeengt und dann mit 91,3 g eines Butanolgestarteten, nur Propylenoxy-Einheiten bestehenden Polyetherols der mittleren Molmasse von 700 g/mol beaufschlagt, bevor man die Destillation unter den zuvor gewählten Bedingungen solange fortsetzt, bis keinerlei Flüchtige mehr übergehen. Nach Erkalten wird ein klares, farbloses hochviskoses Material isoliert.

### Beispiel 2 (Nicht erfindungsgemäß)

Die Synthese erfolgte wie in EP1935922A2 Beispiel 1 beschrieben.

### Herstellung der Polyurethanschäume:

Bei den anwendungstechnischen Tests wurden zwei typische Formulierungen für viskoelastische Polyurethanschäume, die sich wie folgt zusammensetzen, verwendet:

**Tabelle 1: Formulierung I für viskoelastische TDI80-Weichblockschaum-Anwendungen**

| Formulierung I | Massenteile (pphp) |
|---|---|
| Voranol® CP 755¹⁾ | 70 |
| Voranol® CP 3322²⁾ | 30 |
| Voranol® CP 1421³⁾ | 15 |
| Desmodur® T 80⁴⁾ Index <85> | 40,7 |
| Wasser | 1,95 |
| DABCO® 33 LV⁵⁾ | 0,3 |
| DABCO® BDE 11⁵⁾ | 0,2 |
| DABCO® DMEA⁵⁾ | 0,2 |
| KOSMOS® T 9⁶⁾ | 0,07 |
| Stabilisator | variabel |
| Additiv⁸⁾ | variabel |

| | |
|---|---|
| 1) erhältlich bei der Firma Dow Chemical, hierbei handelt es sich um ein Glycerin-basiertes Polyetherpolyol mit einer OH-Zahl von 235 mg KOH/g. 2) erhältlich bei der Firma Dow Chemical, hierbei handelt es sich um ein Glycerin-basiertes Polyetherpolyol mit einer OH-Zahl von 48 mg KOH/g. 3) erhältlich bei der Firma Dow Chemical, hierbei handelt es sich um ein Polyetherpolyol mit einer OH-Zahl von 33 mg KOH/g. 4) Toluylendiisocyanat T 80 (80 % 2,4-Isomer, 20 % 2,6-Isomer) der Firma Bayer Material Science, 3 mPa·s, 48 % NCO, Funktionalität 2. 5) Amin-Katalysator der Firma Evonik Industries AG. 6) Zinnkatalysator, erhältlich bei der Firma Evonik Industries AG: Zinn(II)-Salz der 2-Ethylhexansäure. 8) Als Zellöffner werden das in dem Beispiel 1 beschriebene, erfindungsgemäße Additiv, das in Beispiel 2 beschriebene, nicht erfindungsgemäße Additiv sowie als Vergleichszellöffner Niax® L 626 der Firma Momentive Performance Materials verwendet. | |

**Tabelle 2:**

| Formulierung II für emissions- und geruchsoptimierte viskoelastische TDI80-Weichblockschaum-Anwendungen | |
|---|---|
| Formulierung II | Massenteile (pphp) |
| Voranol® CP 755¹⁾ | 70 |
| Voranol® CP 3322²⁾ | 30 |
| Voranol® CP 1421³⁾ | 15 |
| Desmodur® T 80⁴⁾ Index <85> | 40,7 |
| Wasser | 1,95 |
| DABCO® NE 750⁵⁾ | 0,33 |
| DABCO® NE 300⁵⁾ | 0,22 |
| DABCO® DMEA⁵⁾ | 0,2 |
| KOSMOS® EF⁶⁾ | 0,19 |
| Stabilisator | variabel |
| Additiv⁸⁾ | variabel |

| | |
|---|---|
| 1) erhältlich bei der Firma Dow Chemical, hierbei handelt es sich um ein Glycerin-basiertes Polyetherpolyol mit einer OH-Zahl von 235 mg KOH/g. 2) erhältlich bei der Firma Dow Chemical, hierbei handelt es sich um ein Glycerin-basiertes Polyetherpolyol mit einer OH-Zahl von 48 mg KOH/g. 3) erhältlich bei der Firma Dow Chemical, hierbei handelt es sich um ein Polyetherpolyol mit einer OH-Zahl von 33 mg KOH/g. 4) Toluylendiisocyanat T 80 (80 % 2,4-Isomer, 20 % 2,6-Isomer) der Firma Bayer Material Science, 3 mPa·s, 48 % NCO, Funktionalität 2. 5) Amin-Katalysator der Firma Evonik Industries AG. 6) Zinnkatalysator, erhältlich bei der Firma Evonik Industries AG: Zinn(II)-Salz der 2-Ethylhexansäure. 8) Als Zellöffner werden das in dem Beispiel 1 beschriebene, erfindungsgemäße Additiv, das in Beispiel 2 beschriebene, nicht erfindungsgemäße Additiv sowie als Vergleichszellöffner Niax® L 626 der Firma Momentive Performance Materials verwendet. | |

### Allgemeine Durchführung zur Herstellung der Schäume:

Die Herstellung der Schäume erfolgte nach folgenden Angaben bei 22 °C und 1013 mbar Luftdruck. Zur Herstellung der Polyurethanschäume wurden jeweils 230 g Polyol eingesetzt; die anderen Formulierungsbestandteile wurden entsprechend umgerechnet. Dabei bedeutete beispielsweise 1,0 Teil (1,0 pphp) einer Komponente 1 g dieser Substanz je 100 g Polyol.

In einem Pappbecher wurden der jeweils eingesetzte Zinnkatalysator, die drei Polyole, das Wasser, die Aminkatalysatoren und das jeweilige Additiv vorgelegt und für 60 s mit einem Scheibenrührer bei 1000 U/min vermischt.

Anschließend wurde das Isocyanat zugegeben und mit dem gleichen Rührer für 7 s bei 1500 U/min eingearbeitet. Dabei begann die Mischung im Becher aufzuschäumen. Deshalb wurde sie direkt nach dem Ende des Rührens in eine Verschäumungsbox gegossen. Diese hat eine Grundfläche von 17 x 17 cm und eine Höhe von 30 cm. Nach außen verhinderte eine 5 cm dicke Isolierung aus PU-Schaum ein zu schnelles Abkühlen. Innen war die Box mit einer Kunststofffolie ausgelegt, um den ausgehärteten Schaum anschließend entnehmen zu können. Der Schaum stieg nach dem Eingießen in der Verschäumungsbox auf. Im Idealfall blies der Schaum bei Erreichen der maximalen Steighöhe ab und sackt dann leicht zurück. Dabei öffneten sich die Zellmembrane der Schaumbläschen und eine offenporige Zellstruktur des Schaumstoffs wurde erhalten. Bei einer zu geringen Stabilisierungswirkung kollabierte der PU-Schaum vor Erreichen der maximalen Steighöhe. Im Falle einer zu starken Stabilisierung stieg der Schaum sehr lange und blies nicht ab. Bedingt durch die dann sehr geschlossene Zellstruktur schrumpfte der Schaum beim anschließenden Abkühlen durch die Volumenkontraktion des sich abkühlenden Gases.

### Anwendungstechnische Tests:

Die hergestellten Schäume wurden anhand folgender physikalischer Eigenschaften bewertet:
a) Rücksacken des Schaumstoffes nach dem Ende der Steigphase (=Rückfall).
   Der Rückfall, bzw. das Nachsteigen ergibt sich aus der Differenz der Schaumhöhe nach direktem Abblasen und nach 3 min. nach Abblasen des Schaums. Die Schaumhöhe wird dabei durch eine an einem Zentimetermaß befestigte Nadel auf dem Maximum in der Mitte der Schaumkuppe gemessen. Ein negativer Wert beschreibt hierbei das Rücksacken des Schaumes nach dem Abblasen, ein positiver Wert beschreibt entsprechend das Nachsteigen des Schaumes.
b) Schaumhöhe.
   Die Schaumhöhe ist die Höhe des gebildeten, frei gestiegenen Schaums nach 3 Minuten. Die Schaumhöhe wird in Zentimeter (cm) angegeben.
c) Steigzeit.
   Die Zeitspanne zwischen dem Ende des Mischens der Reaktionskomponenten und dem Abblasen des Polyurethanschaums.
d) Raumgewicht.
   Die Bestimmung erfolgt, wie in DIN EN ISO 845:2009-10 beschrieben, durch Messung der Rohdichte. Das Raumgewicht wird in kg/m³ angegeben.
e) Porosität.
Die Luftdurchlässigkeit des Schaums wurde in Anlehnung an DIN EN ISO 4638:1993-07 durch eine Staudruckmessung am Schaumstoff ermittelt. Der gemessene Staudruck wurde in mm Wassersäule angegeben, wobei dann die niedrigeren Staudruckwerte den offeneren Schaum charakterisieren. Die Werte wurden im Bereich von 0 bis 300 mm gemessen. Die Messung des Staudrucks erfolgte mittels einer Apparatur umfassend eine Stickstoffquelle, Reduzierventil mit Manometer, Durchflussregelschraube, Waschflasche, Durchfluss¬messgerät, T-Stück, Auflagedüse und einem skalierten Glasrohr, in welches Wasser gefüllt ist. Die Auflagedüse weist eine Kantenlänge von 100 x 100 mm, ein Gewicht von 800 g, eine lichte Weite der Austrittsöffnung von 5 mm, eine lichte Weite des unteren Auflageringes von 20 mm und einen Außendurchmesser des unteren Auflage¬ringes von 30 mm auf.
Die Messung erfolgt durch Einstellung des Stickstoffvordrucks per Reduzierventil auf 1 bar und Einregeln der Durchflussmenge auf 480 l/h. Die Wassermenge wird im skalierten Glasrohr so eingestellt, dass keine Druckdifferenz aufgebaut und ablesbar ist. Für die Vermessung des Prüfkörpers mit einer Dimension von 250 x 250 x 50 mm wird die Auflagedüse an den Ecken des Prüfkörpers kantenkongruent aufgelegt sowie einmal an der (geschätzten) Mitte des Prüfkörpers (jeweils auf der Seite mit der größten Oberfläche) aufgelegt. Abgelesen wird, wenn sich ein konstanter Staudruck eingestellt hat.

Die Auswertung erfolgt durch Mittelwertbildung über die fünf erhaltenen Messwerte.
f) Zahl der Zellen pro cm (Zellzahl).
   Diese wird auf einer Schnittfläche optisch bestimmt (gemessen gemäß DIN EN 15702).
g) Stauchhärte CLD 40% nach DIN EN ISO 3386-1:1997 + A1:2010.
   Die Angabe der Messwerte erfolgt in Kilopascal (kPa).
h) Zugfestigkeit und Bruchdehnung nach DIN EN ISO 1798:2008.
   Die Angabe der Messwerte der Zugfestigkeit erfolgt in Kilopascal (kPa), die der Bruchdehnung in Prozent (%).
i) Rückprallelastizität nach DIN EN ISO 8307:2007.
Die Angabe der Messwerte der erfolgt in Prozent (%).

### Bestimmung der Raumtemperatur-Emission nach dem so genannten Prüfkammertest (PK):

Von den erhaltenen Schäumen aus Formulierung II wurde die Emission bei Raumtemperatur in Anlehnung an die DIN-Vorschrift DIN EN ISO 16000-9:2008-04 bestimmt. Die Probenentnahme erfolgte nach 24 Stunden. Hierzu wurden 2 Liter der Prüfkammer-atmosphäre mit einer Flussrate von 100 mL/min über ein mit Tenax® TA (mesh35/60) gefülltes Adsorptionsröhrchen gegeben. Im Folgenden wird die Durchführung der Thermo-desorption mit anschließender Gaschromatographie/Massen¬spektro¬metrie-Kopplung (GC/MS) beschrieben.
a) Messtechnik:
Die Thermodesorption wurde mit einem Thermodesorber "TDS2" mit Probenwechsler der Fa. Gerstel, Mülheim, in Verbindung mit einem Agilent 7890/5975 GC/MSD-System durchgeführt.
b) Die Messbedingungen sind in Tabelle 3 und 4 angegeben.

**Tabelle 3: Messparameter Thermodesorption für PK-Messung.**

| | |
|---|---|
| Thermodesorption | Gerstel TDS2 |
| Desorptionstemperatur | 280 °C |
| Desorptionsdauer | 5 min |
| Fluss | 65 mL/min |
| Transferline | 280 °C |
| Kryofokussierung | KAS 4 |
| Liner | Glasverdampferrohr mit silanisierter Glaswolle |
| Temperatur | -150 °C |

**Tabelle 4: Messparameter Gaschromatographie/Massenspektrometrie für PK-Messung.**

| | |
|---|---|
| GC | Kapillar-GC Agilent 7890 |
| Temperaturprogramm | -150 °C; 1 min; 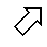 10°C/s; 280°C |
| Säule | Agilent 19091 B-115, Ultra 2, 50 m * 0,32 mm dF 0,5 µm |
| Fluss | 1,3 mL/min const. Flow |
| Temperaturprogramm | 50 °C; 2 min; 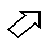 3 °C/min; 92 °C; 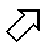 5 °C/min; 160 °C; 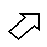 10 °C/min; 280 °C, 20 min |
| Detektor | Agilent MSD 5975 |
| Auswertung | Auswertung des Totalionenstrom-Chromatogramms durch Berechnung als Toluoläquivalent |

c) Zur Kalibrierung wurde 2 µL eines Gemisches aus Toluol und Hexadekan in Methanol (je 0,125 mg/mL) auf ein gereinigtes, mit Tenax® TA (mesh35/60) gefülltes Adsorptionsröhrchen gegeben und vermessen (Desorption 5 min; 280°C).

### Geruchliche Überprüfung der erhaltenen Schäume:

Die fertigen Schäume, dargestellt nach Formulierung II wurden in geruchsneutralen Kunststofftüten gepackt und luftdicht aufbewahrt. Für die Geruchsbewertung des Schaums wurden Würfel der Größe 10 cm x 10 cm x 10 cm ausgeschnitten und in Gläser mit einem Volumen von 1 L überführt, aus denen die Proben abgerochen wurden. Die Gläser wurden mit einem Schraubdeckel verschlossen. Die geruchliche Überprüfung erfolgte nach 24 stündiger Lagerung der Gläser bei 22°C.

Die geruchliche Überprüfung wurde von einem trainierten Panel mit einer Anzahl von 8 Personen bewertet. Hierbei wurde die Intensität des Geruchs abgefragt, wenig Geruch wurde mit 1, mittelstarker Geruch mit 2 und starker Geruch wurde mit 3 bewertet. Von den acht voneinander unabhängig erhaltenen Ergebnissen wurde der Mittelwert gebildet und auf ganze Zahlen gerundet.

### Ergebnisse der Verschäumungen:

Das erfindungsgemäße Additiv des Beispiels 1, das in Beispiel 2 beschriebene, nicht erfindungsgemäße Additiv sowie der Vergleichszellöffner Niax® L 626 der Firma Momentive Performance Materials werden im Folgenden in den Formulierungen I und II ausgeprüft.

Die Ergebnisse der anwendungstechnischen Tests für die verschiedenen Formulierungen und verwendeten Additive sind in Tabellen 5 und 6 wiedergegeben.

**Tabelle 5: Verschäumungsergebnisse bei Verwendung verschiedener Zellöffner nach Formulierung I:**

| Nr. | 1 | 2 | 3 | 4 | 5 |
|---|---|---|---|---|---|
| TEGOSTAB® B 8002^{a)} | 1,5 | - | 1,5 | - | - |
| Additiv | - | 0,5 pphp Niax® L 626^{b)} | 0,7 pphp Beispiel 1^{c)} | 2,5 pphp Beispiel 2^{d)} | 3,5 pphp Beispiel 2^{d)} |
| Steigzeit [s] | > 300^{e)} | 140 | 135 | > 300^{e)} | 165 |
| Steighöhe [cm] | - | 28,8 | 26,5 | - | 29,8 |
| Rückfall [cm] | - | 0,3 | 0,9 | - | 0,8 |
| Porosität [mm Wassersäule] | - | 12 | 28 | - | 260 |
| Dichte [kg/m³] | - | 50,7 | 55,0 | - | 51,2 |
| Stauchhärte (CLD 40%) [kPa] | - | 1,2 | 1,3 | - | 1,3 |
| Zellzahl [cm⁻¹] | - | 6 | 8 | - | 11 |
| Zugfestigkeit [kPa] | - | 31,7 | 41,1 | - | 49,7 |

| | | | | | |
|---|---|---|---|---|---|
| a) Polyethermodifiziertes Polysiloxan, erhältlich bei der Firma Evonik Industries AG. b) Vergleichszellöffner Niax® L 626 der Firma Momentive Performance Materials. c) Erfindungsgemäßes Additiv, dargestellt nach Beispiel 1. d) Nicht erfindungsgemäßes Additiv, dargestellt nach Beispiel 2. e) Der Schaum steigt auf und bläst nicht ab. Stattdessen steigt der Schaum lange nach (> 2,5 min). Beim nachfolgenden Abkühlen schrumpft der Schaum stark. Eine Messung der physikalischen Eigenschaften konnte aufgrund des Schrumpfes nicht durchgeführt werden. | | | | | |

**Tabelle 6: Verschäumungsergebnisse bei Verwendung verschiedener Zellöffner nach Formulierung II.**

| Nr. | 6 | 7 | 8 | 9 |
|---|---|---|---|---|
| TEGOSTAB® B 8002^{a)} | 1,5 | - | 2,0 | - |
| Additiv | - | 0,5 pphp Niax® L 626^{b)} | 0,35 pphp Beispiel 1^{c)} | 4,0 pphp Beispiel 2^{d)} |
| Steigzeit [s] | > 300^{e)} | 200 | 215 | 210 |
| Steighöhe [cm] | - | 28,6 | 30,2 | 29,0 |
| Rückfall [cm] | - | 0,8 | 1,1 | 1,0 |
| Porosität [mm Wassersäule] | - | 75 | 15 | 140 |
| Dichte [kg/m³] | - | 50,0 | 47,6 | 49,8 |
| Stauchhärte (CLD 40%) [kPa] | - | 0,5 | 0,7 | 0,8 |
| Zellzahl [cm⁻¹] | - | 10 | 5-6 | 11 |
| Zugfestigkeit [kPa] | - | 23,8 | 29,2 | 34,4 |
| VOC [µg/m³] | - | 1632 | 229 | 4760 |
| Geruch^{f)} | - | 2 | 1 | 3 |

| | | | | |
|---|---|---|---|---|
| a) Polyethermodifiziertes Polysiloxan, erhältlich bei der Firma Evonik Industries AG. b) Vergleichszellöffner Niax® L 626 der Firma Momentive Performance Materials. c) Erfindungsgemäßes Additiv, dargestellt nach Beispiel 1. d) Nicht erfindungsgemäßes Additiv, dargestellt nach Beispiel 2. e) Der Schaum steigt auf und bläst nicht ab. Stattdessen steigt der Schaum lange nach (> 2,5 min). Beim nachfolgenden Abkühlen schrumpft der Schaum stark. Eine Messung der physikalischen Eigenschaften konnte aufgrund des Schrumpfes nicht durchgeführt werden. f) Die geruchliche Überprüfung erfolgte wie oben beschrieben durch 8 geschulte Personen; die Einstufung erfolgte wie folgt: 1 wenig Geruch, 2 mittelstarker Geruch und 3 starker Geruch. | | | | |

Wie in Tabelle 5 dargestellt, wird ohne den Einsatz eines zellöffnenden Additivs mit Formulierung I ein stark geschrumpfter Schaum erhalten (Eintrag 1). Durch den Einsatz von 0,5 pphp des Vergleichszellöffners Niax® L 626 (Eintrag 2) sowie durch den Einsatz von 0,7 pphp des im Beispiel 1 beschriebenen erfindungsgemäßen Additives (Eintrag 3) können Schäume erhalten werden, die eine ausreichend offene Zellstruktur aufweisen. Dagegen führt der Einsatz von 2,5 pphp des in Beispiel 2 dargestellten nicht erfindungsgemäßen Additivs zu stark geschrumpften Schäumen (Eintrag 4). Erst bei einer für Zellöffner sehr hohen Einsatzmenge von 3,5 pphp kann eine hinreichend offene Zellstruktur erhalten werden, die ein Schrumpfen des Schaumes verhindert (Eintrag 5). Der Schaum zählt mit 260 mm Wassersäule jedoch nach wie vor zu den fast geschlossenen Schäumen (von geschlossenen Schäumen spricht man ab etwa 300 mm Wassersäule).

Wie Tabelle 6 zeigt, wird ohne den Einsatz eines Zellöffners mit Formulierung II erneut ein stark geschrumpfter Schaum erhalten (Eintrag 6). Wie bei Formulierung I werden bei Formulierung II abermals hinreichend offene Zellstrukturen bei dem Einsatz des Vergleichszellöffners Niax® L 626 (0,5 pphp, Eintrag 7) erhalten. Auch der Einsatz von 4,0 pphp des im Beispiel 2 beschriebenen nicht erfindungsgemäßen Additives (Eintrag 9) führt wieder zu einem stabilen Schaum. Im Falle des im Beispiel 1 beschriebenen erfindungsgemäßen Additives (Eintrag 8) ermöglicht bereits der Einsatz von lediglich 0,35 pphp die Erzeugung eines stabilen, offenen Schaums.

Formulierung II beschreibt eine emissionsoptimierte Formulierung für viskoelastischen Polyurethanschaum. Anhand dieser wurden sowohl die Emissionsbelastung als auch die Intensität des Geruches der Schäume bestimmt. Der Schaumstoff, gekennzeichnet durch die Verwendung von 0,5 pphp Niax® L 626 (Eintrag 7), weist einen sehr hohen Emissionswert (1632 µg/m³) auf und ist geruchsintensiv. Der Schaumstoff, dargestellt mit 4,0 pphp des nicht erfindungsgemäßen Additives zeigt sowohl einen extrem hohe Emissionswert (4760 µg/m³) als auch einen sehr intensiven Geruch (Eintrag 9). Der Schaum, welcher durch den Einsatz des erfindungsgemäßen Additives dargestellt wurde, weist dagegen sehr niedrige Emissionswerte (229 µg/m³) auf und wurde von der Mehrzahl der Probanden als geruchsneutral eingestuft (Eintrag 8). Die geruchliche Überprüfung wurde von den Probanden noch zweimal wiederholt, wobei die vorgenannten Ergebnisse in genau der gleichen Weise bestätigt wurden. Aus den Ergebnissen ist ersichtlich, dass die Probanden einen Schaum, der mit einem erfindungsgemäßen Additiv behandelt wurde, als weniger intensiv riechend beurteilt haben.

## Patentansprüche

1. Verfahren zur Herstellung von PU-Schaumstoffen durch Umsetzung
(a) mindestens einer Polyolkomponente mit
(b) mindestens einer Isocyanatkomponente
in Gegenwart von
(c) einem oder mehreren Katalysatoren, die die Reaktionen Isocyanat-Polyol und/oder Isocyanat-Wasser und/oder die Isocyanat-Trimerisierung katalysieren, sowie
(d) optional von ein oder mehreren chemischen oder physikalischen Treibmitteln,
unter Einsatz von
(e) SiOC-verknüpften, linearen Polydialkylsiloxan-Polyoxyalkylen-Blockcopolymeren mit sich wiederholenden (AB)-Einheiten, erhältlich durch Umsetzung von Polyetherdiolen mit äquilibrierten α,ω-Diacetoxypolydialkylsiloxanen,
wobei so viel von den SiOC-verknüpften, linearen Polydialkylsiloxan-Polyoxyalkylen-Blockcopolymeren mit sich wiederholenden (AB)-Einheiten zugegeben wird, dass der Massenanteil dieser Komponente (e) bezogen auf den fertigen PU-Schaumstoff von 0,0001 bis 10 Gew.-%, vorzugsweise 0,01 bis 6 Gew.-%, insbesondere 0,05 bis 5 Gew.-% beträgt.

2. Verfahren gemäß Anspruch 1, **dadurch gekennzeichnet, dass** der PU-Schaumstoff ein PU-Hartschaum, ein PU-Weichschaum, ein viskoelastischer PU-Schaum, ein HR-PU-Schaum, ein PU-Hypersoft-Schaum, ein halbharter PU-Schaum, ein thermoverformbarer PU-Schaum oder ein PU-Integralschaum, bevorzugt ein PU-Weichschaum, HR-PU-Schaum, PU-Hypersoft-Schaum oder viskoelastischer PU-Schaum, insbesondere ein viskoelastischer PU-Schaum, ist.

3. Verfahren gemäß Anspruch 1 oder 2, **dadurch gekennzeichnet, dass** die Umsetzung erfolgt unter Einsatz von
f) Wasser, und/oder
g) einem oder mehreren organischen Lösungsmitteln, und/oder
h) einem oder mehreren Stabilisatoren gegen oxidativen Abbau, insbesondere Antioxidantien, und/oder
i) einem oder mehreren Flammschutzmitteln, und/oder
j) Schaumstabilisatoren, die ungleich der Komponente (e) sind, vorzugsweise auf der Basis von Siloxanen und/oder Polydialkylsiloxan-Polyoxyalkylen-Copolymeren, und/oder
k) einem oder mehreren weiteren Zusatzstoffen, vorzugsweise ausgewählt aus der Gruppe der Tenside, Biozide, Farbstoffe, Pigmente, Füllstoffe, Antistatik-Additive, Vernetzer, Kettenverlängerer, Zellöffner, und/oder Duftstoffe.

4. Verfahren nach einem der Ansprüche 1 bis 3, **dadurch gekennzeichnet, dass** das gewichtsmittlere Molekulargewicht jedes Siloxanblocks (A), (-(R)₂SiO-)_{y} worin R = unabhängig voneinander gleiche oder verschiedene Alkylreste mit 1 -16 Kohlenstoffatomen oder Arylreste mit 6 - 16 Kohlenstoffatomen, bevorzugt Methyl, Ethyl, Phenyl, Oktyl, Dodecyl oder H, insbesondere Methyl, des SiOC-verknüpften, linearen Polydialkylsiloxan-Polyoxyalkylen-Blockcopolymeren mit sich wiederholenden (AB)-Einheiten, zwischen 600 bis 6100 g/mol liegt.

5. Verfahren nach einem der Ansprüche 1 bis 4, **dadurch gekennzeichnet, dass** der Polyoxyalkylenblock (B), (CₙH₍₂ₙ₋ₘ₎R¹ₘO-)ₓ worin R¹ : gleiche oder verschiedene Alkylreste 1 bis 18 Kohlenstoffatomen, die gegebenenfalls Etherfunktionen besitzen, oder Arylreste mit 6-18 Kohlenstoffatomen , die gegebenenfalls Etherfunktionen besitzen, bevorzugt Methyl, Ethyl und Benzyl, insbesondere Methyl darstellt, des SiOC-verknüpften, linearen Polydialkylsiloxan-Polyoxyalkylen-Blockcopolymeren, gemischte Oxyethylen- und Oxypropyleneinheiten mit einem Oxyethylenanteil von 30 bis 70 Gewichtsprozent und 70 bis 30 Gewichtsprozent Oxypropylenanteil, bezogen auf den Gesamtgehalt an Oxyalkyleneinheiten im Block, enthält.

6. Verfahren nach einem der Ansprüche 1 bis 5, **dadurch gekennzeichnet, dass** das gewichtsmittlere Molekulargewicht jedes Polyoxyalkylenblocks (B), (CₙH₍₂ₙ₋ₘ₎R¹ₘO-)ₓ worin R¹ : gleiche oder verschiedene Alkylreste 1 bis 18 Kohlenstoffatomen, die gegebenenfalls Etherfunktionen besitzen, oder Arylreste mit 6 - 18 Kohlenstoffatomen , die gegebenenfalls Etherfunktionen besitzen, bevorzugt Methyl, Ethyl und Benzyl, insbesondere Methyl darstellt, des SiOC-verknüpften, linearen Polydialkylsiloxan-Polyoxyalkylen-Blockcopolymeren, zwischen 600 und 10.000 g/mol liegt.

7. Verfahren nach Anspruch 1 bis 6, **dadurch gekennzeichnet, dass** der Anteil der Siloxanblöcke A im gesamten SiOC-verknüpften, linearen Polydialkylsiloxan-Polyoxyalkylen-Blockcopolymer zwischen 15 und 50, vorzugsweise zwischen 20 und 40 Gewichtsprozent beträgt.

8. Verfahren nach Anspruch 1 bis 7, **dadurch gekennzeichnet, dass** das SiOC-verknüpfte, lineare Polydialkylsiloxan-Polyoxyalkylen-Blockcopolymer ein gewichtsmittleres Molekulargewicht von 10.000 g/mol bis 200.000 g/mol, vorzugsweise 25.000 g/mol bis 180.000 g/mol, insbesondere 60.000 g/mol bis 120.000 g/mol aufweist.

9. Zusammensetzung zum Einsatz bei der Herstellung von PU-Schaumstoffen, vorzugsweise von PU-Weichschaum, HR-PU-Schaum, PU-Hypersoft-Schaum oder viskoelastischem PU-Schaum, insbesondere viskoelastischem PU-Schaum, **dadurch gekennzeichnet, dass** sie SiOC-verknüpftes, lineares Polydialkylsiloxan-Polyoxyalkylen-Blockcopolymer mit sich wiederholenden (AB)-Einheiten, erhältlich durch Umsetzung von Polyetherdiolen mit äquilibrierten α,ω-Diacetoxypolydialkylsiloxanen, umfasst, insbesondere nach den Maßgaben, wie in den Ansprüchen 4 bis 8 angegeben,
sowie vorzugsweise umfassend Trägermedien, insbesondere Glykole, wie z.B. Monoethylenglycol (MEG), Diethylenglycol (DEG), Propylenglycol (PG) oder Dipropylenglycol (DPG), Alkoxylate oder Öle synthetischer und/oder natürlicher Herkunft.

10. Polyurethanschaum, vorzugsweise PU-Hartschaum, PU-Weichschaum, viskoelastischer PU-Schaum, HR-PU-Schaum, PU-Hypersoft-Schaum, halbharter PU-Schaum, thermoverformbarer PU-Schaum oder PU-Integralschaum, bevorzugt PU-Weichschaum, HR-PU-Schaum oder viskoelastischer PU-Schaum, insbesondere viskoelastischer PU-Schaum, **dadurch gekennzeichnet, dass** er durch ein Verfahren gemäß einem der Ansprüche 1 bis 8 und/oder unter Einsatz einer Zusammensetzung nach Anspruch 9 erhältlich ist.

11. Verwendung von PU-Schäumen gemäß Anspruch 10 als Kühlschrankisolierung, Dämmplatte, Sandwichelement, Rohrisolation, Sprühschaum, 1- & 1,5-Komponenten-Dosenschaum, Holzimitat, Modellschaum, Verpackungsschaum, Matratze, Möbelpolster, Automobil-Sitzpolster, Kopfstütze, Instrumententafel, Automobil-Innenverkleidung, Automobil-Dachhimmel, Schallabsorptionsmaterial, Lenkrad, Schuhsole, Teppichrückseitenschaum, Filterschaum, Dichtschaum, Dichtmittel und Kleber, Beschichtung oder zur Herstellung entsprechender Produkte.

12. Verwendung von SiOC-verknüpften, linearen Polydialkylsiloxan-Polyoxyalkylen-Blockcopolymeren mit sich wiederholenden (AB)-Einheiten, erhältlich durch Umsetzung von Polyetherdiolen mit äquilibrierten α,ω-Diacetoxypolydialkylsiloxanen, zur Verbesserung des Emissionsverhalten und der Geruchsneutralität von PU-Schaumstoffen, bevorzugt PU-Weichschaum, HR-PU-Schaum, PU-Hypersoft-Schaum oder viskoelastischer PU-Schaum , insbesondere von viskoelastischem PU-Schaum.

13. Verwendung von SiOC-verknüpften, linearen Polydialkylsiloxan-Polyoxyalkylen-Blockcopolymeren mit sich wiederholenden (AB)-Einheiten, erhältlich durch Umsetzung von Polyetherdiolen mit äquilibrierten α,ω-Diacetoxypolydialkylsiloxanen, zur Reduktion der VOC-Emissionen von PU-Schaumstoffen, bevorzugt PU-Weichschaum, HR-PU-Schaum, PU-Hypersoft-Schaum oder viskoelastischer PU-Schaum, insbesondere viskoelastischem PU-Schaum.

14. Matratze und/oder Kissen, umfassend einen PU-Schaum, insbesondere viskoelastischen PU-Schaum, hergestellt unter Einsatz von SiOC-verknüpften, linearen Polydialkylsiloxan-Polyoxyalkylen-Blockcopolymeren mit sich wiederholenden (AB)-Einheiten, erhältlich durch Umsetzung von Polyetherdiolen mit äquilibrierten α,ω-Diacetoxypolydialkylsiloxanen, vorzugsweise erhalten durch ein Verfahren gemäß einem der Ansprüche 1 bis 8 und/oder unter Einsatz einer Zusammensetzung nach Anspruch 9,
wobei, im Falle eines viskoelastischen PU-Schaums, dieser vorzugsweise aufweist: eine Glasübergangstemperatur zwischen -20 und +15 °C und/oder eine Stauchhärte CLD, 40 % nach DIN EN ISO 3386-1:2015-10 von 0,1 - 5,0 kPa, insbesondere 0,5 - 3,0 kPa, und/oder eine Rückprallelastizität von < 10 %, gemessen nach DIN EN ISO 8307:2008-03, und/oder ein Raumgewicht von 30 bis 130 kg/m3 und/oder eine Porosität, vorzugsweise nach Aufdrücken des Schaumes, von 1 bis 250, insbesondere 1 bis 50 mm Wassersäule.

15. Matratze und/oder Kissen, nach Anspruch 14, **dadurch gekennzeichnet, dass** sie eine Höhe von mindestens 1 cm bis maximal 50 cm aufweist, sowie eine Breite von mindestens 20 cm bis maximal 300 cm, vorzugsweise mindestens 70 cm bis maximal 200 cm, sowie eine Länge von mindestens 20 cm bis maximal 300 cm, vorzugsweise von mindestens 150 cm bis maximal 220 cm.
